# EUROPEAN PATENT APPLICATION

(11) **EP 2 345 963 A1**
(43) Date of publication of application: **20.07.2011**
(21) Application number: 09823634.2
(22) Date of filing: 28.10.2009
(51) Int. Cl.: G06F 9/48

(54) **COMPUTER SYSTEM, METHOD, AND COMPUTER PROGRAM FOR MANAGING BATCH JOB**

(30) Priority: 31.10.2008 JP 2008281069
(71) Applicant: International Business Machines Corporation, Armonk, NY 10504 (US)
(72) Inventor: KUDOMI Shinsaku, Yamato-shi Kanagawa 242-8502 (JP); KOUNO Tomoaki, Yamato-shi Kanagawa 242-8502 (JP); OOKADO Akira, Yamato-shi Kanagawa 242-8502 (JP)
(74) Representative: Litherland, David Peter
(86) International application number: PCT/JP2009/068524
(87) International publication number: WO 2010/050524

(57) **Abstract**

Problem Management of batch jobs in a complicated system involves the following problems. It is difficult to properly design a batch job net in consideration of dependencies between jobs. A resource conflict between jobs tends to occur. A job cannot be easily changed along with a change in system configuration.
Solving Means The present invention provides a computer system for managing batch jobs. The computer system includes a storage unit for storing at least one job template, and an execution unit for creating or updating a job net definition following a condition defined in the at least one job template, creating or updating a job net, or executing a discovery of a job conflict using at least one attribute or relationship in a set of data including at least one predetermined attribute of an configuration item, and a relationship between the configuration item and another configuration item, the set of data being stored in a repository and updatable through a discovery for detecting information about a configuration item. The present invention further provides a method and computer program product for managing batch jobs.

## Description

The present invention relates to a computer system, a method, and a computer program product for managing a batch job.

### Background Art

A lot of batch jobs are processed in a complicated system, for example, an enterprise system. To process the batch job, the batch job should be managed. To manage the batch job includes proper design and generation of a batch job and maintenance of a batch job. The proper design of a batch job includes to properly design a dependency between jobs and properly scheduling jobs not to cause a resources conflict between the jobs. The maintenance of a batch job includes to change settings of a batch job in response to a change in, for example, system configuration related to any job. The change in system configuration related to any job refers to a configuration change that would influence a job design.

A job management application has a function to execute jobs in accordance with its design and a function of suspending subsequent jobs in the event of error and notifying an administrator of the error. The International Business Machines Cooperation (registered trademark; hereinafter referred to as "IBM") has marketed Tivoli (registered trademark) Workload Scheduler as the job management application. The Tivoli (registered trademark) Workload Scheduler enables centralized control on automated job scheduling and thus eliminates the necessity for job management in each system and realizes reduction of a burden on the administrator and a management cost.

Here, the ITIL (Information Technology Infrastructure Library; trademark of the Office of Government Commerce) is a collection of the best practices for realizing IT service management. The ITIL is focused on a service support and a service delivery. A configuration management is an example of the service support. The configuration management refers to a process for recognizing an configuration item targeted for IT service management (hereinafter also referred to as "configuration item" and abbreviated to "CI") to keep, update, confirm, and audit information about the configuration item. The configuration item means resources targeted for configuration. The configuration item includes not only system resources inclusive of hardware and software but also facilities necessary for providing an IT service, documents such as a description about how to provide IT services, an operating procedure, and a diagram, hardware or software maintenance services, processes, and human resources. The ITIL framework recommends centralized management of configuration items using a configuration management database (hereinafter also abbreviated to "CMDB"). The CMDB is a database that records at least one predetermined attribute of a configuration item and a relationship between the configuration item and another configuration item. The most important abilities following the installation of the CMDB include an ability of automatically discovering information about an configuration item (also referred to as "discovery" or "automatic detection") and an ability of automatically updating information about an configuration item (also referred to as "tracking"). As for the CMDB, information about a configuration item needs to be correctly reflected to the CMDB.

IBM has provided software for supporting construction of a CMDB and controlling an operating process based on the CMDB, which is called "Tivoli Change and Configuration Management Database" (hereinafter referred to as "Tivoli CCMDB"). The discovery and tracking in the Tivoli CCMDB are detailed in IBM Redbooks Deployment Guide Series: IBM Tivoli Change and Configuration Management Database Configuration Discovery and Tracking v1.1, pp. 41 to 64, November 2006 (Non-Patent Document 1). In the Tivoli CCMDB, operation management software is loaded to execute the discovery and tracking.

The Tivoli (registered trademark) CCMDB can identify 300 types of configuration items of a decentralized network environment such as a server, a client, an operating system (OS), middleware (for example, Web/AP/DBMS/LDAP), package software, a management tool, a network device, and a storage device and in addition, can automatically detect and update information about each configuration item, for example, information about computer configuration, information about an application running on each computer, configuration information of a network attached storage (NAS) connected to each computer, and a storage area network (SAN) directly connected to a network. A process for collecting information about each configuration item varies among configuration items to be controlled. Basically, a computer system managing a CMDB periodically accesses a control remote interface using a SSH (Secure SHell) etc. to read a config file on an OS or configuration information. Alternatively, a computer system managing a CMDB executes a command to confirm configuration. Thus, it is necessary to install an agent program to a configuration item to be controlled. In 2006, information such as were detected and updated based on the above process are organized into 31 types of sections (categories such as Computer System, Database, Application, and Process), 636 types of classes (base unit of a data model, which belongs to one or plural sections), 2609 types of attributes (data attribute information, which belongs to one class), 7 types of interfaces (group of frequently-used attributes, which belongs to plural sections), 57 types of relationships, and 49 types of data types (types of data) based on the IBM's proposed configuration-management-database data model "Common Data Model" (hereinafter, referred to as "CDM"). The CDM is described in detail in IBM REDPAPER (DRAFT version) IBM Tivoli Common Data Model: Guide to Best Practices (IBM Form Number REDP-4389-00), pp. 2-7, November, 2007 (Non-Patent Document 2). Information about each configuration item and a relationship between a target configuration item and another configuration item is transferred to a GUI display tool, for example, a TADDM console. Then, each configuration item and a target configuration item and another configuration item are visually displayed on a display device using individual blocks and a link between the blocks.

[Non-Patent Document 1] IBM Redbooks Deployment Guide Series: IBM Tivoli Change and Configuration Management Database Configuration Discovery and Tracking v1.1, pp. 41-64, November, 2006
[Non-Patent Document 2] IBM RED PAPER (DRAFT version) IBM Tivoli Common Data Model: Guide to Best Practices (IBM FormNumber REDP-4389-00), pp. 2-7, November, 2007

### Disclosure of the Invention

### Problems to be Solved by the Invention

Management of a batch job in a complicated system involves the following problems.
Since a job designer could not completely control system because of complicated system configuration, it is difficult to properly design the system in consideration of a dependency between jobs.
A batch job includes an operation job and an infrastructure job, which are independently designed by designers in different teams. Thus, the teams should be reconciled with each other, and a resource conflict between jobs tends to occur.
when system configuration is changed, where to change is uncertain in some cases due to designer's absence, a job cannot be easily changed along with the change in system configuration.

### Means for Solving the Problems

The present invention provides a computer system for managing batch jobs. The computer system includes a storage unit for storing at least one job template; and an execution unit for creating or updating a job net definition following a condition defined in the at least one job template, creating or updating a job net, or executing a discovery of a job conflict using at least one attribute or relationship in a set of data including at least one predetermined attribute of an configuration item, and a relationship between the configuration item and another configuration item, the set of data being stored in a repository and updatable through a discovery for detecting information about a configuration item.

According to an embodiment of the present invention, the execution unit includes a first creating unit that creates a job net definition from at least one job template or updates a job net definition using at least one attribute or relationship in the set of data. According to an embodiment of the present invention, the set of data is a set of data updated through the discovery.

According to an embodiment of the present invention, the job template includes a job execution type, a job execution command, a configuration item to which the job template is applied, and a job execution prerequisite.

According to an embodiment of the present invention, the job net definition includes a job description, an execution sequence of jobs, and a job execution schedule.

According to an embodiment of the present invention, the prerequisite includes a condition for searching for a configuration item, and a job execution type for the configuration item. The discovery involves identifying a configuration item based on a condition for searching for the configuration item.

According to an embodiment of the present invention, a configuration item that matches a condition in the prerequisite is identified using at least one attribute or relationship in the set of data.

According to an embodiment of the present invention, the first creating unit associates the identified configuration item with another job template.

According to an embodiment of the present invention, the first creating unit applies a user-defined job definition to the job template to create a job net definition.

According to an embodiment of the present invention, the job definition includes a job definition name, a job description, a job executor, a job-executing user, a job start schedule, a preceding job, an estimated job execution time, and a job template name.

According to an embodiment of the present invention, the job template includes an argument for obtaining a set of data regarding a configuration item.

According to an embodiment of the present invention, the execution unit includes a second creating unit that creates a job net from a job net definition or updates a job net using at least one attribute or relationship in the set of data.

According to an embodiment of the present invention, the job net definition includes an argument for obtaining a set of data regarding a configuration item.

According to an embodiment of the present invention, the job net definition is a log maintenance job net definition, the argument is logpath, and data of the logpath is updated using the set of data.

According to an embodiment of the present invention, the second creating unit applies a date when a job net is input to a system for executing the job net, and at least one of an attribute and a relationship of a set of data corresponding to an argument for a configuration item defined by a job net definition, to the job net.

According to an embodiment of the present invention, the job conflict includes a case where an execution time zone where at least one of a first configuration item associated with a job execution command of a first job template and a second configuration item having a relationship with the first configuration item is used by the job conflicts with an execution time zone where at least one of a third configuration item associated with a job execution command of a second job template and a fourth configuration item having a relationship with the third configuration item is used by the job.

According to an embodiment of the present invention, the second configuration item is detected using at least one attribute or relationship in a set of data regarding the first configuration item, and the fourth configuration item is detected using at least one attribute or relationship in a set of data regarding the third configuration item.

According to an embodiment of the present invention, the set of data regarding the first configuration item is a set of data updated through the discovery, or the set of data regarding the third configuration item is a set of data updated through the discovery.

According to an embodiment of the present invention, the job conflict includes a case where at least one of an execution time zone where a first configuration item associated with a job execution command of the job template and a second configuration item having a relationship with the first configuration item is used by the job is a time zone that prohibits execution of the job.

According to an embodiment of the present invention, each of the set of data regarding the first configuration item and the set of data regarding the second configuration item is a set of data updated through the discovery.

According to an embodiment of the present invention, the discovery is executed just before the job net definition is created, just before the job net is created, or just before the job net is input to a system for executing the job net.

According to an embodiment of the present invention, the job net includes a job for the discovery.

The present invention further provides a method for managing a batch job. The method includes the following steps executed by a computer system. The steps include: a step of identifying a configuration item defined in at least one job template; and a step of creating or updating a job net definition following a condition defined in the at least one job template, creating or updating a job net, or executing a discovery of a job conflict using at least one attribute or relationship in a set of data including at least one predetermined attribute of an configuration item, and a relationship between the configuration item and another configuration item, the set of data being stored in a repository and updatable through a discovery for detecting information about a configuration item.

According to an embodiment of the present invention, the executing step includes a step of creating a job net definition from a job template using at least one attribute or relationship in the set of data.

According to an embodiment of the present invention, the step of creating the job net definition from the job template includes a step of identifying a configuration item matching a condition described in a job execution prerequisite defined in a job template using at least one attribute or relationship in the set of data.

According to an embodiment of the present invention, the step of creating the job net definition from the job template includes a step of associating the identified configuration item with another job template.

According to an embodiment of the present invention, the step of creating the job net definition from the job template includes a step of applying a user-defined job definition to the job template to create a job net definition.

According to an embodiment of the present invention, the executing step includes a step of creating a job net from a job net definition using at least one attribute or relationship in the set of data.

According to an embodiment of the present invention, the step of creating the job net from the job net definition includes a step of updating data of logpath defined in a log maintenance job net definition that is an example of job net definitions.

According to an embodiment of the present invention, the step of creating the job net from job net definition includes a step of applying a date when a job net is input to a system for executing the job net, and at least one of an attribute and a relationship of a set of data corresponding to an argument for a configuration item defined by a job net definition, to the job net.

According to an embodiment of the present invention, the step of executing a discovery of a job conflict includes a step of detecting that an execution time zone where at least one of a first configuration item associated with a job execution command of a first job template and a second configuration item having a relationship with the first configuration item is used by the job conflicts with an execution time zone where at least one of a third configuration item associated with a job execution command of a second job template and a fourth configuration item having a relationship with the third configuration item is used by the job.

According to an embodiment of the present invention, the detecting step includes a step of detecting the second configuration item using at least one attribute or relationship in a set of data regarding the first configuration item, and a step of detecting the fourth configuration item using at least one attribute or relationship in a set of data regarding the third configuration item.

According to an embodiment of the present invention, the step of executing a discovery of a job conflict includes a step of detecting that at least one of an execution time zone where a first configuration item associated with a job execution command of the job template and a second configuration item having a relationship with the first configuration item is used by the job is a time zone that prohibits execution of the job. According to an embodiment of the present invention, each of the set of data regarding the first configuration item and the set of data regarding the second configuration item is a set of data updated through the discovery.

According to an embodiment of the present invention, the method further includes the following steps executed by the computer system. The steps include a step of executing a discovery just before the job net definition is created, just before the job net is created, or just before the job net is input to a system for executing the job net.

The present invention further provides a method for managing a batch job. The method includes the following steps executed by a computer system. The steps include: a step of storing a set of data including at least one predetermined attribute of an configuration item, and a relationship between the configuration item and another configuration item in a repository, the set of data being updatable through a discovery for detecting information about a configuration item; a step of identifying a configuration item defined in a job template; a step of searching for another configuration item matching a condition defined in the job template using at least one attribute or relationship in the set of data regarding the identified configuration item; a step of associating the other configuration item found through the search with another job template; and a step of creating a job net definition using the job template and the other job template.

The present invention further provides a program product for managing a batch job. The computer program product prompts a computer system to execute each step in the method according to any one of the embodiments.

### Advantages

According to the embodiments of the present invention, a batch job is managed utilizing a CMDB to thereby enable automatic creation of a job net and detection of a job conflict. Further, according to the embodiments of the present invention, a batch job is managed utilizing a CMDB to thereby promote reuse of a job.

### Best Mode for Carrying Out the Invention

The term "job" refers to individual routine processing executed on each computer.
Management of the "job" involves a job design phase and a phase for executing a designed job.

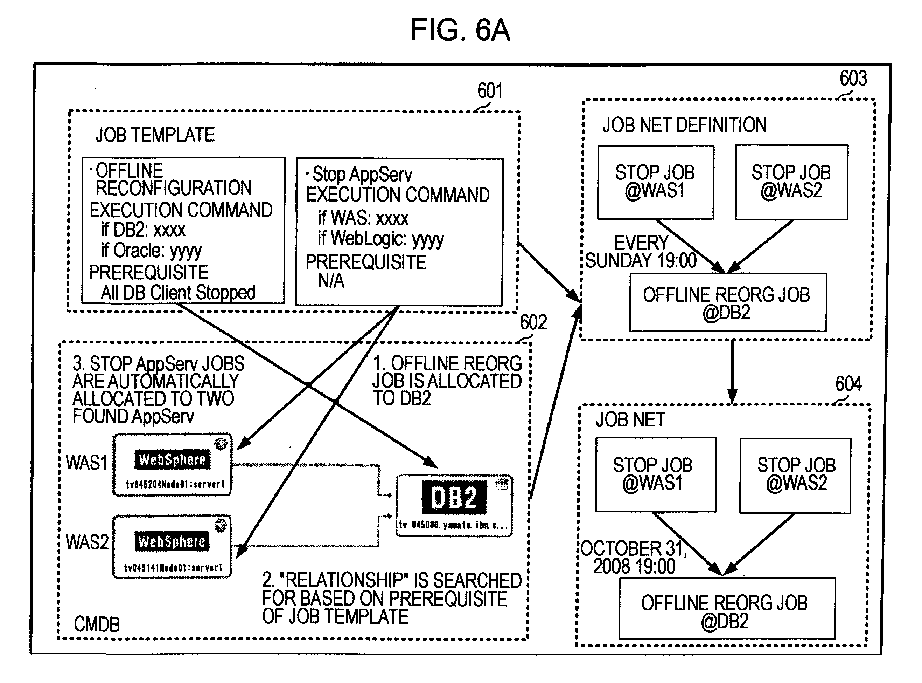

The term "job template" refers to a template underlying a job design. Thus, a designer prepares the "job template" before the job design phase. The "job template" is prepared for each type of jobs, for example. For example, even if plural offline reorg jobs (Offline Reorg Jobs) are prepared, the plural offline reorg jobs reference one offline reorg job template. The "job template " includes, for example, a job template identifier (ID), a description for explaining a job template, an action type, a job execution command (Action), a CI type to apply, a prerequisite, and an impact flag, but the present invention is not limited thereto. The job template ID is a unique identifier assigned to help a computer in identifying a job template. The description for explaining a job template is a description given by a user upon creating or updating the job template. The action type means a type of job execution command such as Reorg, Start, and Stop. The type is preset by a job designer. The job execution command is described using a script, for example. The job execution commands are classified by the CI type and defined like "xxxx in DB2, yyyy in Oracle" (each of DB2 and Oracle is a registered trademark), for example (see a job template (601) in Fig. 6A). The CI type to apply describes a type of configuration item to which the job template execution command is applied. The CI type includes, for example, a database (DB), an operating system (OS), an application server (AppServ), a Web server (WebServ), and a WebSphere Application Server (WAS), but the present invention is not limited thereto. The prerequisite is a prerequisite under which a job could be executed. The prerequisite includes a condition for searching for a configuration item, and an action type for searching for another job template, but the present invention is not limited thereto. The condition for searching for a configuration item refers to a condition for narrowing down a search for a CI type to apply. The action type for searching for another job template is used for searching for another job template having the specified action type. A target configuration item is searched for based on a condition for searching for a configuration item using at least one of an attribute and a relationship of a CI instance in a CMDB. The attribute is, for example, a type of CI (for example, DB, OS, AppServ, WebServ, and WAS). The relationship is, for example, a relationship between applications (for example, assigns, canConnect, canUse, connectAt, connects, controls, deployedOn, Located, Managed, Owned, provides, runAt, uses, and usedBy). The impact flag indicates whether a predetermined requisite is satisfied.

The term "job definition" means the group of parameters assigned to a job template, which are defined by a user to create a job net definition. The "job definition" includes, for example, a job definition name, a job description, a job executor, a job-executing user, a job start schedule, a preceding job, an estimated job execution time, and a job template, but the present invention is not limited thereto.
The job definition name is a unique name assigned to help a computer in identifying a job definition. The job description is specified by, for example, a job execution command or a batch file. The job execution command is described using, for example, a script. As for the job execution command, if a target CI type is DB2, for example, a DB2 execution command (implementation parameter for xxxx in the job template) is defined. If a target CI type is Oracle, an Oracle execution command ((implementation parameter for yyyy in the job template) is defined. The job executor indicates an ID for identifying a computer or system for executing a job. A job-executing user indicates a user who executes a job. The job start schedule indicates a schedule to start a job. The schedule could be determined by a user on a daily, weekly, monthly, or yearly basis, or on the basis of user-defined period. The preceding job indicates a job preceding a target job defined in the job definition. The job is executed after the completion of the preceding job. The estimated job execution time indicates an estimated time necessary to execute the job. The job template indicates an ID of a job template ID to which the job definition is applied.

The term "job net definition" refers to a definition created as a result of designing a job. The "job net definition" is created by applying the job definition to the job template. Further, a job net is created from the "job net definition". The "job net definition" includes, for example, a job net definition name, a job itself, a job execution sequence, and a job execution schedule, but the present invention is not limited thereto.
The job net definition name is a unique name assigned to help a computer in identifying a job net definition. The job itself includes a job description defined in a job template and in addition, information about the job executor, the job-executing user, the estimated job execution time, and the job template. The job description is specified by, for example, a job execution command or a batch file. As for the job execution command, if a target CI type is DB, for example, an implementation parameter for DB2 in the job definition is applied to the DB2 execution command in the job template. If a target CI type is Oracle, an implementation parameter for Oracle in the job definition is applied to an Oracle execution command in the job template. The job executor and the job-executing user are identified by identifying a CI instance name, for example. The job itself also defines a job dependence and a job net dependence.

The "job net" refers to data actually input to a system executing a job to execute the batch job. The term input means execution of a job net. The "job net" is created by a job management server reading the job net definition. The job net is a job net definition converted into an instance. As for the "job net", if job processing involves several independent job groups, for example, each group is set as a job net. The processing in each unit is, for example, a daily transfer request. In general, a job execution schedule is set on a job net basis.

According to embodiments of the present invention, management of a batch job includes creation of a job net definition or a job net, updating of a job net definition or a job net, or detection of a job conflict, or a combination thereof.

According to the embodiments of the present invention, the discovery of a job conflict includes a discovery of a conflict between jobs or a discovery of such a situation that attribute or relationship data of a configuration item for which a job is executed is against a prerequisite in a job template or an impact flag.

The CMDB is described in detail below.

Hereinafter, basic terms regarding the CMDB will be described.
In the embodiments of the present invention, a repository stores at least one set of data. The set of data is data that represents at least one predetermined attribute of a configuration item and a relationship with another configuration item. The set of data includes, for example, data representing at least one predetermined attribute of configuration items including a hardware configuration item and a software configuration item and a relationship between the configuration item and another configuration item. The repository is, for example, a CMDB. The configuration item, and a relationship between the configuration item and another configuration item could be implemented based on, for example, an instance of static data or an instance of a Java (registered trademark of Sun Microsystems, Inc) class. The repository is not particularly limited insofar as storing the set of data. However, a preferable one is a CMDB recording unit for recording a CMDB.

### -Configuration Item (CI)

The CI is data corresponding to a configuration item within a range of IT service management. In other words, the CI is a basic unit of IT service management. The CI is, for example, a system resource including hardware and software, a facility necessary for providing IT services, documents such as a description about how to provide IT services, an operating procedure, and a diagram, hardware or software maintenance services, processes, and human resources. In the future, various types of CI would be managed in the CMDB. Further, each CI is represented as an instance of a data model on the CMDB.

### -Configuration Management Database (CMDB)

The CMDB is a database for storing and managing compiled information about every component in an information system. The CMDB records at least one predetermined attribute of each CI and a relationship with another CI. The CMDB aids an organization to understand a relationship between components and manage the configuration thereof. The CMDB forms the heart of an ITIL-framework configuration management process. The CMDB is conceptually a database but physically might be a database system or a spreadsheet of spreadsheet software. By using the CMDB, an administrator can easily understand a CI relationship.

### -Configuration Item Instance (CI instance)

The CI instance is data corresponding to the CI. Each CI instance is represented as an instance of a data model on the CMDB. The instance is, for example, an instance of static data or an instance of a Java (registered trademark of Sun Microsystems, Inc) class. The implemented instance of Java class is stored in the CMDB based on a mechanism called Java Data Objects (JDO), which perpetuates an instance of Java class and stores the instance in a hard disk. Thus, there is no fear of deleting the created instance of Java class even if a computer system is temporarily powered off. The instance is read from a storage device, for example, a hard disk when the system is powered on, and then expanded onto a main memory and turned into an instance of Java class that could be changed or deleted based on a Java program. In the following description, the CI is also installed into the CMDB as an instance.

### -Data Model

The data model is a scheme for defining the CI. In other words, the data mode is an information model that gives consistent definitions of a CI to be managed and a CI relationship. More specifically, the data model defines a predetermined attribute of a CI and a relationship with another CI (manufacturing apparatus or process). The data model is typified by the IBM configuration-management-database data model "CDM". The implementation of the CDM is executed based on, for example, the Unified Modeling Language (UML).

### -Attribute (Attributes)

The attribute identifies individual CIs prior to management of each CI and describes each CI. Although not limited thereto, examples of the attribute include a CI name (a generic name of a CI, for example, a server, a client, or a firewall), a product number (ID)(a number for individually identifying particular entities of the CI such as a production number or a serial number), a category (CI category, for example, hardware, software, or a document), a type (description of a CI, which segmentalizes the category), a model number (model number of a CI named by a provider), a duration of guarantee (duration of guarantee preset by a CI provider), a version number (version number of a CI), a location (a location of a CI, for example, an installation place of a PC, a software library, a storage area of a medium, and a site providing a service), an owner (name of CI management representative), an obligation start date (date when an owner is in charge of managing a CI), a provider (CI developer or provider), a license (license number and the number of licenses), the date of provision (date when a CI is provided to the organization), the date of acceptance (date when the organization accepts a CI), the use start date (date of the first use of a CI), a CI status (current status, for example, running, under test, and in failure, or a future status, for example, a planned CI status), a CI instance status (whether a CI instance is valid or invalid). Attributes that would be required for IT service management are continuously defined.

### -Relation (Relation)

The relation indicates a CI relationship. The relation could be defined by a data model similar to the CI. Conceivable examples of the relation include assigns, canConnect, canUse, connectAt, connects, controls, deployedOn, Located, Managed, Owned, provides, runAt, uses, and usedBy in the Common Data Model. Relations that would be required for IT service management are continuously defined.

Hereinafter, the embodiments of the present invention will be described with reference to the accompanying drawings. The embodiments are given for the purpose of describing preferred modes of the present invention and should not be construed as limiting the scope of the present invention. In addition, the same components are denoted by identical reference numerals throughout the accompanying drawings unless otherwise specified.

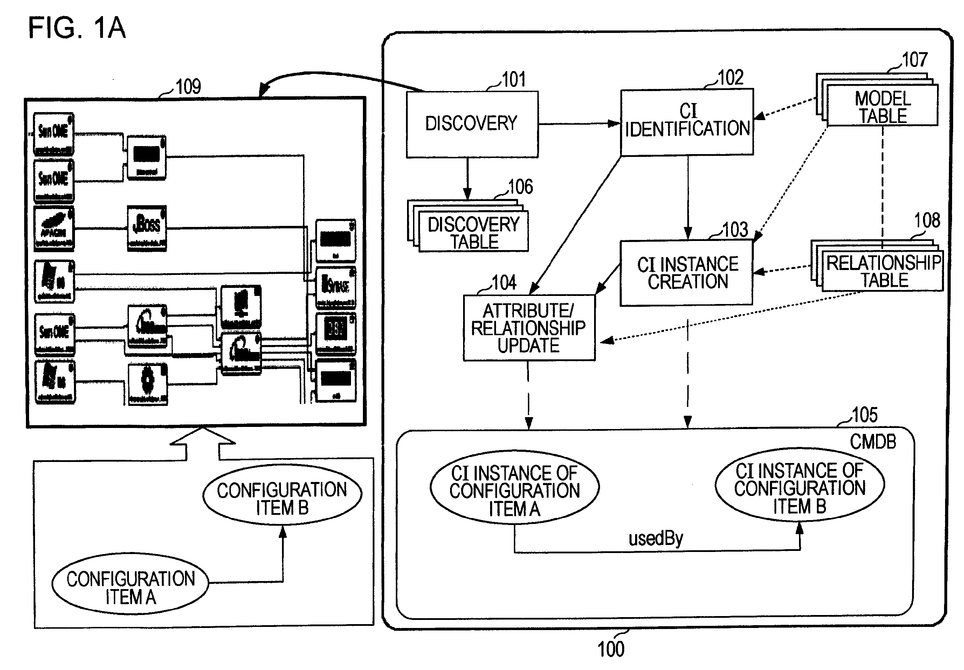

Fig. 1A shows an example of a computer system (100) including a CMDB for managing a CI according to the related art.
Fig. 1A lustrates a configuration item A and a configuration item B as an example of the CI. The configuration items A and B might be either a software configuration item or a hardware configuration item. The software configuration item is, for example, DB2 (registered trademark), Websphere (registered trademark), LINUX, Tomcat, or Apache, but the present invention is not limited thereto.
The computer system (100) includes a discovery unit (101), a CI identifying unit (102), a CI instance creating unit (103), an attribute and relationship updating unit (104), and a CMDB (105). The discovery unit, the CI identifying unit, the CI instance creating unit, the attribute and relationship updating unit, and the CMDB may be implemented on a simple computer or distributed to plural computers. The computer system (100) further includes a discovery table (106), a model table (107), and a relationship table (108). These tables may be implemented on a simple computer or distributed to plural computers.
Fig. 1A also shows an example of a TADDM console screen (109). The screen displays a CI and a CI relationship. The CI and CI relationship displayed on the screen are illustrated by way of example, and all CIs and CI relationship to be managed by the computer system (100) are not displayed.
The computer system (100) manages a configuration item targeted for management of the computer system. The computer system (100) manages configuration items that could be discovered by the computer system (100).

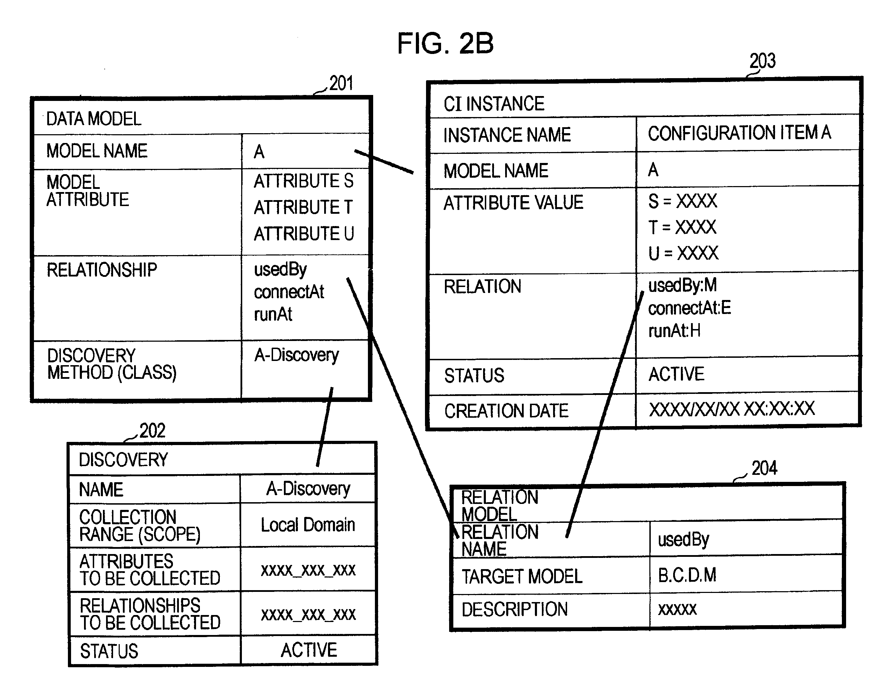

The discovery unit (101) detects information about a CI to be managed by the CMDB (also referred to as "discover"). The CI is partially displayed on the TADDM console screen (109). The computer system (100) may include plural discovery units (101). Preferably, a managing object is connected to a computer system through a network. The network may be wired or wireless. An administrator of the computer system could arbitrarily set a detecting object. A detection range can be specified using, for example, a domain name, an IP address, a MAC address, a device identifier, or a database name or a combination thereof. If a target CI is, for example, hardware or software, information about the hardware or software is detected. The detected information may be information about a new CI or an updated attribute or relationship value of an existing CI. The new CI is a CI that is detected by the discovery unit (101) and is not yet registered in the CMDB (105). The existing CI refers to a CI whose instance is already registered in the CMDB (105). The discovery unit (101) detects the information about the CI following a discovery instance (for example, A-Discovery)(Fig. 2B, 202) stored in the discovery table (106). Which discovery instance to use is specified by a discovery method in the data model (Fig. 2B, 201). The discovery unit (101) transfers the detected information about the CI to the CI identifying unit (102).

The CI identifying unit (102) receives the information about the CI from the discovery unit (101) to process a detection result. The CI identifying unit (102) determines whether the information about the CI is information about a new CI or an updated attribute or relationship value of the existing CI with reference to the CMDB (105). The determination is made by comparing, for example, a CI instance name stored in the CMDB with the information about the CI. If the information about the CI is information about a new CI, the CI identifying unit (102) transfers the information to the CI instance creating unit (103). On the other hand, if the information about the CI is information about an updated attribute or relationship value of an existing CI, the CI identifying unit (102) transfers the information to the attribute and relationship updating unit (104) .

The CI instance creating unit (103) creates a set of data representing a predetermined attribute of the CI and a relationship with another CI from the information about the CI based on the data model (Fig. 2B, 201) stored in the model table (107) and the relationship model (Fig. 2B, 204) stored in the relationship table (108). The set of data could be implemented based on, for example, an instance of static data or an instance of a Java (registered trademark of Sun Microsystems, Inc) class. The CI instance is an example of the set of data. Fig. 2B shows an example of the CI instance (203). The set of data is stored in the CMDB (105). Here, the set of data may include an attribute and relationship in an CI instance (see Fig. 2B, 203). Alternatively, the CI instance may include an attribute, and a relationship instance may be independently stored in the CMDB (105). In the latter case, the CI instance may include a link to specify a related relationship instance.

The attribute and relationship updating unit (104) realizes tracking together with the discovery unit (101). The attribute and relationship updating unit (104) reflects an updated CI attribute or relationship to a CI instance of the CI stored in the CMDB. In other words, an attribute or relationship value of a CI instance of the CI is updated. The updating is performed by replacing the value with the information about the CI detected with the discovery unit (101). The replacement may be performed by replacing every attribute or relationship value of the CI instance with the information about the CI detected with the discovery unit (101). Alternatively, only different values may be replaced.

The CMDB (105) stores a CI instance of the CI (Fig. 2B, 203) .

The discovery table (106) stores a discovery instance (Fig. 2B, 202). The discovery instance is used when the discovery unit (101) detects information about the CI. The discovery instance (202) is implemented based on, for example, an instance of static data or an instance of a Java (registered trademark of Sun Microsystems, Inc) class. The discovery instance is also called discovery policy. The discovery instance (202) includes a search range of the discovery unit (101), more specifically, a scope as a CI search range, attributes to be collected, and relationships to be collected (202). The collecting object could be specified using, for example, a subnet IP address, a range of an IP address, individual IP addresses, a MAC address, a device identifier, a host name, or a database name, or a combination thereof. To describe another form, the collecting object may be a schedule management database (not shown) connected to the computer system (100) through a network. The schedule management database stores, for example, data about control over a process for using a device. To describe still another form, the collecting object may be a database (not shown) storing a batch processing definition file. If the collecting object is a database storing a batch processing definition file, the discovery unit (101) reads contents of the back processing definition file to perform detection. The batch processing definition file stores data about the order in which devices are used, for example.

The model table (107) stores a data model (Fig. 2B, 201). The data model is used when the CI instance creating unit (103) creates a set of data representing a predetermined attribute of the CI and a relationship with another CI.

The relationship table (108) stores the relationship model (Fig. 2B, 204). The relationship model is used when the CI instance creating unit (103) creates a set of data representing a predetermined attribute of the CI and a relationship with another CI.

In the illustrated example of Fig. 1A, the discovery unit (101) detects information about a CI to be managed, which is connected to the computer system (100) through a network, and detects information about a configuration item A and a configuration item B, and a relationship between the configuration items. Next, the CI identifying unit (102) determines whether the detected information represents a new CI with reference to the CMDB (105). According to the determination, the CI instance creating unit (103) creates a CI instance of the configuration item A and a CI instance of configuration item B, and an instance of a relationship between the configuration items (usedBy). The CI instance creating unit (103) stores each of the created instances in the CMDB (105). In Fig. 1A, the CI instance of the configuration item B has a relationship of usedBy with the CI instance of the configuration item A.
The discovery unit (101) creates a CI and a CI relationship following the data model (Fig. 2B, 201) based on the detected information about the CI and registers the created ones in the CMDB (105). The CMDB (105) stores an attribute of the CI and a relationship with another CI. Accordingly, the system administrator can extract a real CI dependence using the CMDB (105).

The configuration item includes a hardware configuration item and a software configuration item, and these items may be arbitrarily combined.

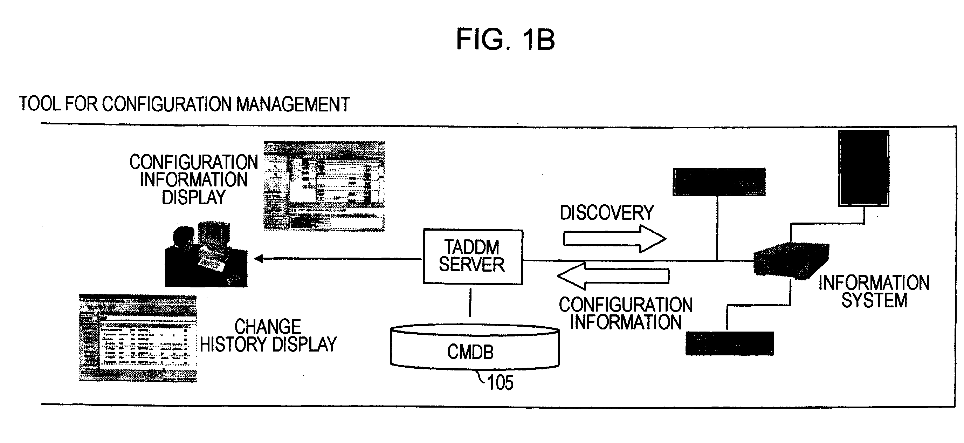

Fig. 1B schematically shows a configuration management tool according to the related art.
The configuration management tool includes an automatic collecting function (discovery) for collecting information about a configuration item (hereinafter also referred to as simply "configuration information"), a function of graphically displaying configuration information (topology), and a function of analyzing a change history and a configuration comparison (analytics). For example, the TADDM server acquires configuration information about an information system using ssh, SNMP, WMI, and the like. The configuration information is, for example, a type or configuration of an operation system in each information system, and a type or configuration value of an application. The TADDM server stores the acquired information in the CMDB as a CI instance. The TADDM server sends the configuration information and the change history information to a computer of an administrator based on the CI instance stored in the CMDB. The computer of an administrator displays the configuration information and the change history based on the information.

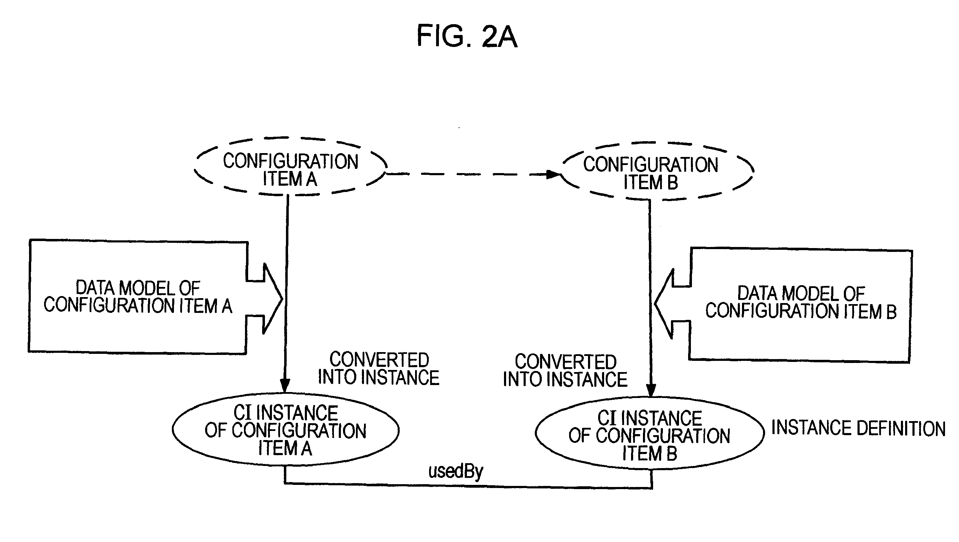

Fig. 2A shows a technique of creating a CI, a CI instance, and a relationship (usedBy) instance according to the related art.
The CI instance of the configuration item A is created from the information about the configuration item A detected with the discovery unit (Fig. 1A, 101) using the data model of the configuration item A by means of the CI instance creating unit (Fig. 1A, 103). Likewise, the CI instance of the configuration item B is created from the information about the configuration item B detected with the discovery unit (101) using the data model of the configuration item B by means of the CI instance creating unit (103). Each data model of the configuration item A and the configuration item B is stored in the model table (Fig. 1A, 107). An instance of a CI relationship, that is, a relationship (usedBy) between the configuration item A and the configuration item B is created from the information about the configuration item A detected with the discovery unit (101) following the relationship model by means of the CI instance creating unit (103). The relationship model is stored in the relationship table (Fig. 1A, 108).
Further, if the configuration item is, for example, the configuration item B1, B2, or B3, the information about the configuration item B1, B2, or B3 is converted into an instance using the data model of the configuration item B to thereby create a CI instance of the configuration item B1, a CI instance of the configuration item B2, and a CI instance of the configuration item B3. Each CI instance of the configuration item B1, B2, or B3 is also stored in the CMDB (Fig. 1A, 105).

Fig. 2B shows the data model (201) stored in the model table (Fig. 1A, 107), the discovery instance (202) stored in the discovery table (Fig. 1A, 106), the CI instance (203) (of the configuration item A) stored in the CMDB (Fig. 1A, 105), and the relationship model (204) stored in the relationship table (Fig. 1A, 108) according to the related art.

The data model (201) is a scheme for defining a CI. The data model (201) includes descriptions of, for example, a "model name" indicating a model of a CI, a "model attribute" indicating an attribute of the CI specified by the model name, a "relationship" indicating a conceivable relationship between the CI specified by the model name and another CI, and a "discovery method" for specifying a discovery instance for detecting the CI specified by the model name. The model attribute is prescribed following, for example, the attribute defined in the IBM configuration-management-database data model "CDM", but the present invention is not limited thereto. In 2006, 2609 type of attributes are prescribed in the CDM. The CMDB administrator can arbitrarily specifies an attribute of the data model (201). The relationship is prescribed based on, for example, a relationship defined in the CDM, but the present invention is not limited thereto. In 2006, 57 types of relationships are prescribed in the CDM. The discovery method can be specified by the discovery instance name. In the example of Fig. 2B, the method is A-Discovery.

The discovery instance (202) includes each description of a "name" of a discovery instance specified by the discovery method of the data model (201), a "scope" of managing objects (CIs) collected by the discovery unit (Fig. 1A, 101), an "attribute to collect" and "relationship to collect" of the managing objects (CIs) collected by the discovery unit (101), and a "status" indicating whether the discovery instance is an active or inactive.

The CI instance (203) includes each description of an "instance name" for determining a CI for the instance, a "model name" indicating which data model is used to create the instance, an "attribute value" indicating a value of each attribute specified by the data model, a description (value) of each "relationship" specified by the data model, a "status" indicating whether an instance is active or inactive, and "creation date" indicating the date when the CI instance was created. The CI instance preferably includes a CI instance identifier unique to each CI instance. The CI instance identifier is not particularly limited as long as the CI instance can be discriminated from the other CI instances. For example, a host name, a serial number, or a combination with another attribute set to a predetermined value can be used. The CI instance (203) in Fig. 2B indicates that the CI instance is a CI instance of the configuration item A; the CI instance is obtained using the data model A; the CI instance includes S, T and U as attributes, each of which takes a value; the CI instance has a relationship of "used by M" (usedBy:M), a relationship of "connected at E" (connectAt:E), and a relationship of "run at H" (runAt:H); and the CI instance is active, and indicates the creation date of the CI instance.

The relationship model (204) is a scheme for defining a relationship specified by the data model (201). The relationship model (204) includes each description of a "relationship name" such as usedBy, a "target data model" for identifying a data model for the relationship, and an "explanation" of the relationship.

Fig. 2C shows a screen example of configuration information management in a CMDB according to the related art. The screen is displayed using a GUI. The display is achieved using, for example, a TADDM. In the illustrated example of Fig. 2C, the configuration item is an application. An application relationship is indicated by the solid line. In Fig. 2C, application names (trademark of each company) are given for illustrative purposes.

Fig. 3A shows examples of a job net according to an embodiment of the present invention.
The examples include a job net_1 (301), a job net_2 (302), a job net_3 (303), and a job net_4 (304).
The job net_1 1 (301) is a job preceding the job net_2 (302) and the job net_3 (303). The job net_2 (302) is a job preceding the job net_4 (304). The job net_3 (303) is a job preceding the job net_4 4 (304).
The job net_1 (301) includes four jobs (a job 1 to a job 4). The job net_2 (302) includes two jobs (a job 5 and a job 6). The job net_3 (303) and the job net_4 4 (304) each include one job (a job7, a job8).
Each of the Job 2 and Job 3 depend on the job 1. The job 4 depends on the Job 2 and Job 3. The job 6 depends on the job 5.

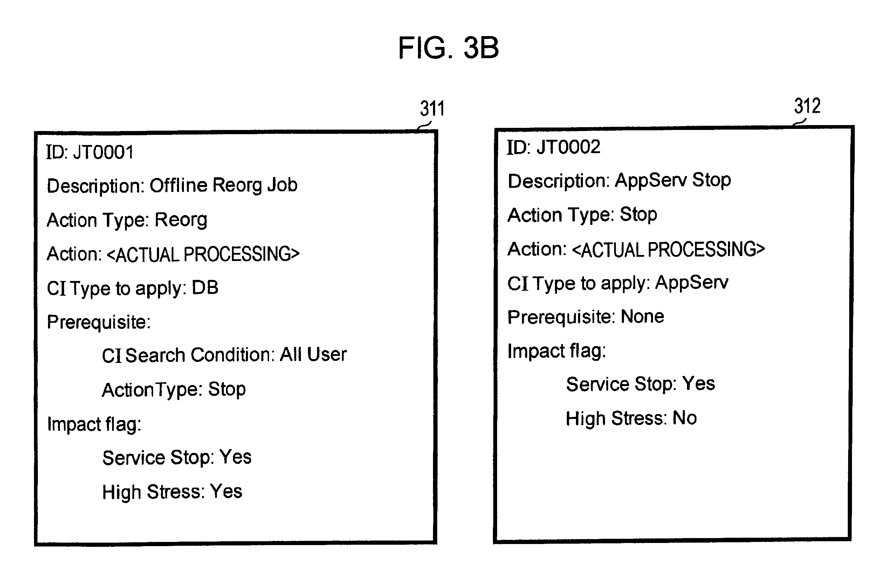

Fig. 3B shows an example of a job template according to an embodiment of the present invention. (1) A job template (311) is described below.
A job template ID (ID) is JT00001.
A description for explaining the job template is an offline reorg job (Offline Reorg Job).
The action type is reorg (Reorg).
As for the job execution command (Action), actual processing can be described using, for example, a job script. The job script may include attribute or relationship data of a configuration item as an argument. As the argument, a value of a CI type to apply or a prerequisite is used.
The CI type to which a job template is applied (CI type to apply) is a database (DB).
The prerequisite includes a search condition of a configuration item (CI Search Condition), and an action type for searching for another job template. The search condition of the configuration item is all users (All User). The term "All User" refers to a configuration item using a DB. The configuration item has a relationship of, for example, "usedBy DB" with the DB. Likewise, the DB has a relationship of, for example, "usedBy Webspere" with the configuration item. In this example, the configuration item is Webspere as software, and the Webspere uses a DB. An action type of the searched configuration item is stop.
An impact flag is set to YES in case of service stop, and YES in case of high stress. The service stop means to suspend a system service. The high stress means a high stress on a system. (2)A job template (312) is described below.
A job template ID is JT00002.
A description for explaining a job template is an application server stop (AppServ Stop).
The action type is stop (Stop).
The job execution command can be described using a job script.
A CI type to apply is an application server (AppServ).
A prerequisite is not described.
An impact flag is set to YES in case of service stop, and NO in case of high stress.

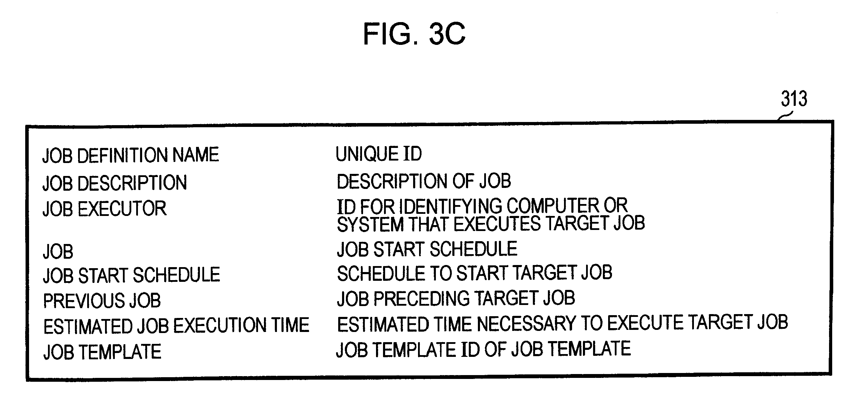

Fig. 3C shows an example of a job definition according to an embodiment of the present invention.
A job definition (313) includes a job definition name, a job description, a job executor, a job-executing user, a job start schedule, a preceding job, an estimated job execution time, and a job template.

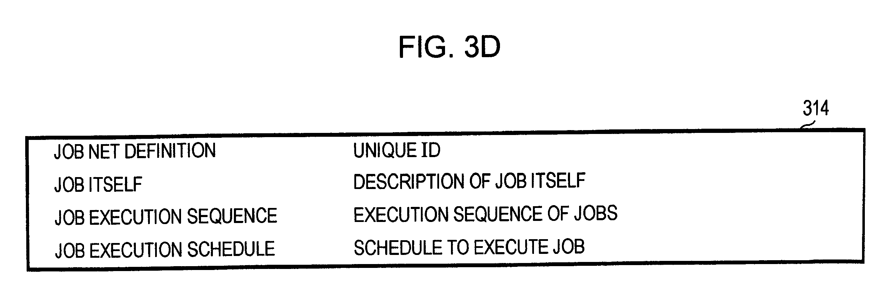

Fig. 3D shows an example of a job net definition according to an embodiment of the present invention.
A job net definition (314) includes a job net definition name, a job itself, a job execution sequence, and a job execution schedule.
The job itself includes a variable, and the variable is replaced by the latest configuration information in the CMDB upon creating a job net from a job net definition. As for the variable, a parameter given as a variable like %Web1.logpath% is used in an execution command, for example. To describe %Web1.logpath%, configuration information is retrieved from the CMDB based on Web1 (ID) and logpath (attribute name). Then, the variable is replaced by the configuration information retrieved from the CMDB. The job execution sequence includes a description of a preceding job. The job execution schedule indicates a schedule to execute the job. The job execution schedule defines an execution schedule like at 19:00 on Sundays, for example. Upon creating a job net from a job net definition, the job schedule is converted to the actual date when a job net is input to a system intended to execute a job net, for example, 19:00, November 2, 2008 (Sunday).

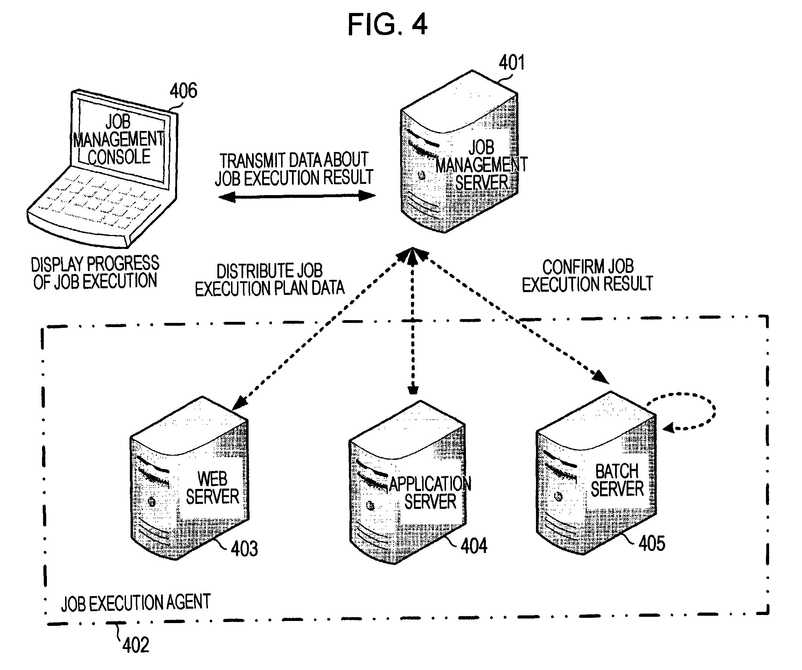

Fig. 4 shows an example of a job management server according to the related art.
A job management server (401) consolidates management of jobs input to a job execution agent (402). An administrator of a job can confirm details of the job using a job management console (406). The job management server (401) inputs job execution plan data to the job execution agent (402) based on the job execution schedule. The job execution agent (402) includes, for example, a Web server (403), an application server (404), and a batch server (405). The Web server (403), the application server (404), and the batch server (405) execute a job based on the job execution plan data. The job execution agent (402) sends data about a result of executing a job toward the job management server (401). The job management server (401) controls the schedule to determine whether to execute a subsequent job based on the job execution result. The job management server (401) sends the data about the job execution result toward the job management console (406) in response to a request from the job management console (406). The administrator of a job can confirm the job execution result using the job management console (406).
The conventional job management server (401) manually prepares job execution plan data and also manually deals with a job conflict. Further, the server manually changes the job execution plan data following a change in system configuration as a target of the job.

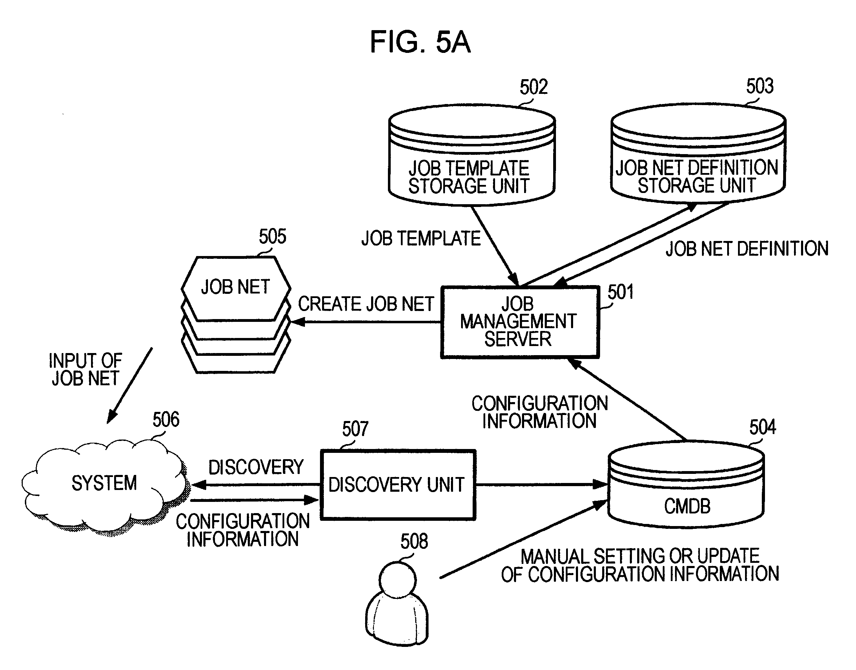

Fig. 5A is a diagram showing an example of the entire system configuration according to an embodiment of the present invention.
A job management server (501) supports designing of a job and executes a job using a CI instance stored in a CMDB (504). The job design support includes automatic creation of a job net definition or a job net and automatic updating of a job net definition or a job net. The job management server (501) further verifiers a job design using a CI instance stored in a CMDB (504). The verification of the job design includes detection of a job conflict.
The job management server (501) reads a job template from a storage unit (502) storing job templates. The job management server (501) further reads a job definition from a storage unit (not shown) which stores job definitions. The storage unit storing job definitions may be provided in the same physical storage device as the storage unit (502) storing job templates.
The job management server (501) applies a job definition to a job template to create a job net definition. At the time of creating a job net definition, the job management server (501) can identify a configuration item necessary to create the job net definition from a job template used for creating the job net definition using a CI instance from the CMDB (504). The CI instance includes an attribute and a relationship of the configuration item. The job management server (501) also creates a job net definition from a job template using at least one of the attribute and the relationship of the configuration item. The CI instance in the CMDB is automatically updated with a discovery unit (507). Here, upon updating the CI instance, an administrator (508) may manually set or update the CI instance. This is because some configuration items could accept only manual setting or updating. The created job net definition is stored in the job net definition storage unit (503).
The job management server (501) creates a job net (505) from a job net definition. The job management server (501) further applies data about the CI instance in the CMDB (504) to an argument defined in the job net definition to create the job net (505) from the job net definition.
The job management server (501) inputs the created job net (505) to a system (506) executing a job net.
The job management server (501) can request the discovery unit (507) to execute discovery of configuration information just before the job net definition is created, just before the job net is created, or just before the job net is input to the system (506). Through the discovery, an attribute and a relationship of the CI instance in the CMDB (504) are updated.
The job management server (501) can update the job net definition or the job net based on at least one of the updated attribute and the relationship of the CI instance.
The job management server (501) detects a job conflict using at least one of the attribute and the relationship of the CI instance upon creating or updating a job net definition or a job net.

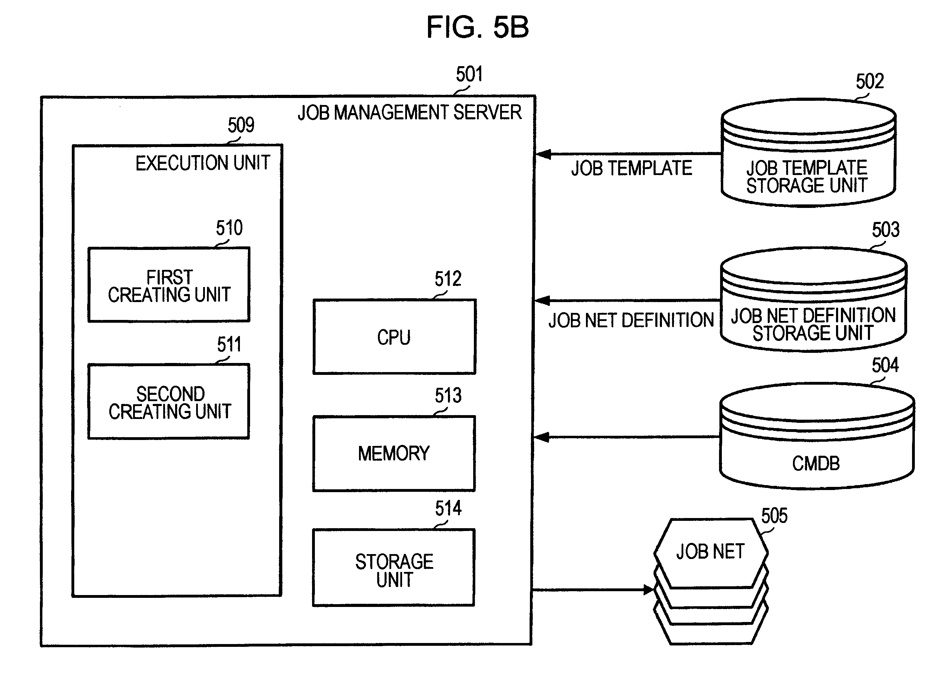

Fig. 5B is a diagram showing an example of the job management server according to an embodiment of the present invention.
The job management server (501) includes an execution unit (509), a CPU (509), a memory (513), and a storage unit (514) such as a hard disk drive.
The execution unit (509) creates and updates a job net following a condition defined in at least one job template or detects a job conflict using at least one of an attribute and a relationship of a CI instance stored in the CMDB (504).
The execution unit (509) includes a first creating unit (510) and a second creating unit (511). The first creating unit (510) creates a job net definition from a job template using at least one of the attribute and the relationship of the CI instance. The first creating unit (510) stores the created job net definition in the job net definition storage unit (503). The second creating unit (511) creates a job net (505) from the job net definition using at least one of the attribute and the relationship of the CI instance.
A CPU (509) executes a process for managing a batch job in response to a command from the job management server (501) .
The storage unit (514) stores a job template read from the storage unit (502) storing job templates. The storage unit (514) further stores a job net definition read from the storage unit (503) storing job net definitions.

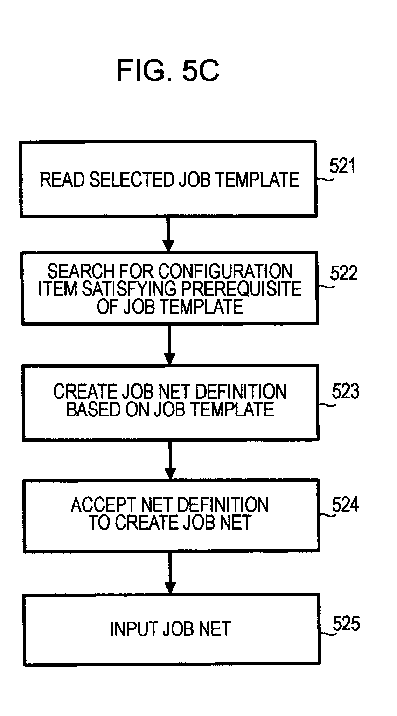

Fig. 5C is a flowchart of a process for creating a job net definition and a job net according to an embodiment of the present invention.
In step S531, the job management server (501) reads at least one job template selected by a job designer from the job template storage unit (502) in order to create a job net definition.
In step S532, the job management server (501) searches for a configuration item having a relationship with a configuration item to which the selected job template is applied and satisfying a prerequisite of the job template.
In step S533, the job management server (501) applies a job definition to the selected job template to create a job net definition. Further, if an argument is defined in the selected job template, the job management server (501) applies at least one of attribute and relationship data of a CI instance stored in the CMDB (504) to the argument.
In step S534, the job management server (501) stores the created job net definition in the job net definition storage unit (503).
In step S535, the job management server (501) rechecks the job net definition in response to a command to create a job net. This is because a CI instance in the CMDB might be updated within a predetermined period from the time when the job net definition was created. For example, another configuration item might satisfy a prerequisite of the job template as a result of the updating. Thus, the job management server (501) repeats the processing in step S532 and updates the job net definition if necessary.
In step S536, the job management server (501) reads the job net definition to create a job net. If an argument is defined in the read job net definition, the job management server (501) applies at least one of attribute and relationship data of the CI instance stored in the CMDB (504) to the argument.
In step S537, the job management server (501) stores the created job net in a job net storage unit (not shown).
In step S538, the job management server (501) rechecks the job net in response to a command to input the job net to a system executing the job net. This is because a CI instance in a CMDB might be updated within a predetermined period from the time when the job net was created. For example, a value of the argument defined in the job net definition might be changed as a result of the updated. Thus, the job management server (501) repeats the processing in step S536 and updates the job net if necessary.
In step S539, the job management server (501) inputs the job net to a computer executing the created job net.

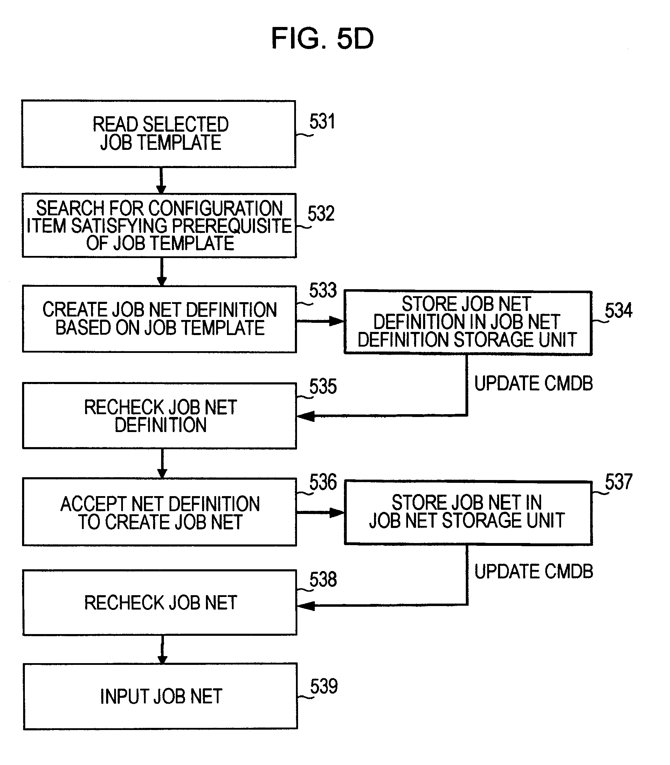

Fig. 5D is a flowchart of a process for updating a job net definition or a job net according to an embodiment of the present invention.
In step S521, the job management server (501) reads at least one job template designed by a job designer from the job template storage unit (502) to create a job net definition. Upon the job design, the job designer performs the first selection of a job template. The designer sends information about the selected job template to the computer system.
In step S522, the job management server (501) searches for a configuration item having a relationship with a configuration item to which the selected job template is applied and satisfying a prerequisite of the selected job template. The search is executed by searching for attribute and relationship data of plural CI instances stored in the CMDB (504).
In step S523, the job management server (501) applies the job definition to the selected job template to create a job net definition. Further, if an argument is defined in the selected job template, the job management server (501) applies at least one of attribute data and relationship data of the CI instance stored in the CMDB (504) to the argument.
In step S523, the job management server (501) reads the job net definition to create a job net. If an argument is defined in the read job net definition, the job management server (501) applies at least one of attribute data and relationship data of the CI instance stored in the CMDB (504) to the argument.
In step S525, the job management server (501) inputs the job net to a computer executing the job net.

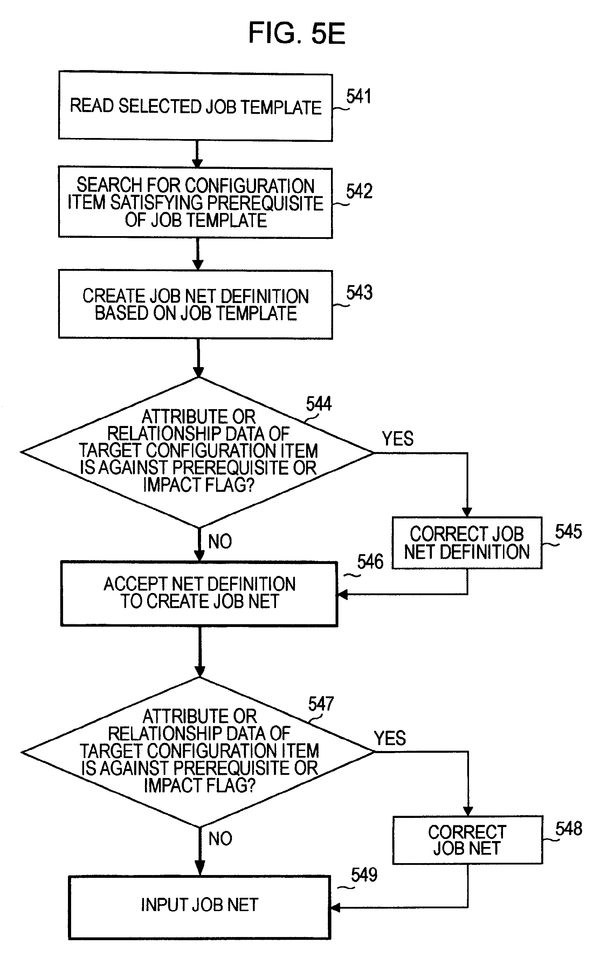

Fig. 5E is a flowchart of a process for verifying a job according to an embodiment of the present invention.
In step S541, the job management server (501) reads at least one job template designed by a job designer from the job template storage unit (502) to create a job net definition.
In step S542, the job management server (501) searches for a configuration item having a relationship with a configuration item to which the selected job template is applied and satisfying a prerequisite of the selected job template.
In step S543, the job management server (501) applies a job definition to the selected job template to create a job net definition. Further, if an argument is defined in the selected job template, the job management server (501) applies at least one of attribute data and relationship data of the CI instance stored in the CMDB (504) to the argument.
In step S544, the job management server (501) checks whether attribute or relationship data of the configuration item is against a prerequisite of the job template or an impact flag. This is because the CI instance in the CMDB might be updated within a predetermined period from the time when the job net definition was created. For example, another configuration item might satisfy the prerequisite of the job template as a result of the updating. If the configuration item is against the prerequisite or the impact flag, the processing advances to step S545. On the other hand, if the configuration item is not against the prerequisite or the impact flag, the processing advances to step S546.
In step S545, the job management server (501) repeats the processing in step S543.
In step S546, the job management server (501) reads the job net definition to create a job net. If an argument is defined in the read job net definition, the job management server (501) applies at least one of attribute data and relationship data of the CI instance stored in the CMDB (504) to the argument.
In step S547, the job management server (501) checks whether attribute or relationship data of the configuration item is against a prerequisite of the job template or an impact flag in response to a command to input a job net to a system executing the job net. This is because the CI instance in the CMDB might be updated within a predetermined period from the time when the job net was created. For example, another configuration item might satisfy the prerequisite of the job template as a result of the updating. Further, if an argument is defined in the job net definition, at least one of the updated attribute and relationship data of the CI instance stored in the CMDB (504) is applied to the argument. If the configuration item is against the prerequisite or impact flag, the processing advances to step S548. On the other hand, if the configuration item is not against the prerequisite or impact flag, the processing advances to step S549.
In step S549, the job management server (501) inputs the job net to a computer executing the job net.

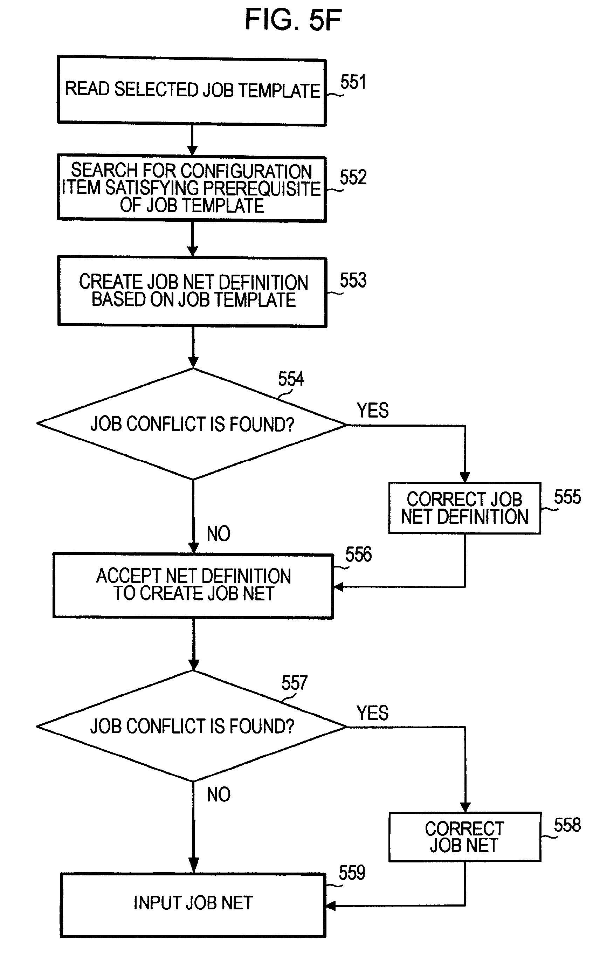

Fig. 5F is a flowchart of a process for detecting a job conflict according to an embodiment of the present invention.
In step S551, the job management server (501) reads at least one job template designed by a job designer from the job template storage unit (502) to create a job net definition.
In step S552, the job management server (501) searches for a configuration item having a relationship with a configuration item to which the selected job template is applied and satisfying a prerequisite of the selected job template.
In step S553, the job management server (501) applies a job definition to the selected job template to create a job net definition. Moreover, if an argument is defined in the selected job template, the job management server (501) applies at least one of attribute data and relationship data of the CI instance stored in the CMDB (504) to the argument.
In step S554, the job management server (501) checks whether a job conflict occurs. The job conflict includes, for example, the following conflicts.
- An execution time zone where at least one of a first configuration item associated with a job execution command of a first job template and a second configuration item having a relationship with the first configuration item is used by the job conflicts with an execution time zone where at least one of a third configuration item associated with a job execution command of a second job template and a fourth configuration item having a relationship with the third configuration item is used by the job.
- At least one of an execution time zone where a first configuration item associated with a job execution command of the job template and a second configuration item having a relationship with the first configuration item is used by the job is a time zone that prohibits execution of the job.
If a job conflict is detected, the processing advances to step S555. On the other hand, if a job conflict is not detected, the processing advances to step S556.
In step S555, a job net definition is corrected to prevent a job conflict. To execute the correction, if an argument is defined in the selected job template, at least one of attribute data and relationship data of the CI instance stored in the CMDB (504) is applied to the argument.
In step S556, the job management server (501) reads the job net definition to create a job net. If an argument is defined in the read job net definition, the job management server (501) applies at least one of attribute data and relationship data of the CI instance stored in the CMDB (504) to the argument.
In step S557, the job management server (501) checks whether a job conflict occurs. If a job conflict is found, the processing advances to step S558. On the other hand, if a job conflict is not found, the processing advances to step S558.
In step S558, a job net definition is corrected to prevent a job conflict. To execute the correction, if an argument is defined in the selected job template, at least one of attribute data and relationship data of the CI instance stored in the CMDB (504) is applied to the argument.
In step S559, the job management server (501) inputs the job net to a computer executing the created job net.

Fig. 6A shows how to create a job net definition and a job net according to an embodiment of the present invention.
A job template (601) includes two job templates. The job templates are an offline reorg job template and a Stop AppServjob (hereinafter, referred to as "Stopjob") template.
A offline reorg job template execution command is an execution command for DB2 (registered trademark) and Oracle (registered trademark). An offline reorg prerequisite of the job template is to stop all DB clients.
A CMDB (602) stores a set of data regarding a configuration item "DB2" (database) and each of configuration items WebSphere Application Server (application)(hereinafter, referred to as "WAS") 1 and 2.
One attribute of the configuration item DB2 is that a CI type is DB. Further, one attribute of the configuration item WAS is that a CI type is AppServ.
The configuration item DB2 has a relationship of "usedBy WAS1 and usedBy WAS2". Further, the configuration item WAS has a relationship of "usedBy DB2 client".
A job net definition (603) is created from the two job templates. In the job net definition, for example, a job execution schedule is also defined. The job execution schedule is, for example, at 19:00, every Sunday. In the job net definition, for example, an argument for data read from the CMDB is also defined.
A job net (604) is created from the job net definition. In the job net, the job execution schedule is turned into an instance. The job execution schedule is, for example, at 19:00 on October 26, 2008. In this way, in the job net, the job execution schedule is converted to the date when the job net is actually input to the system executing the job net. Likewise, in the job net, at least one of attribute data and relationship data of the CI instance from the CMDB is applied to the argument for the data read from the CMDB.

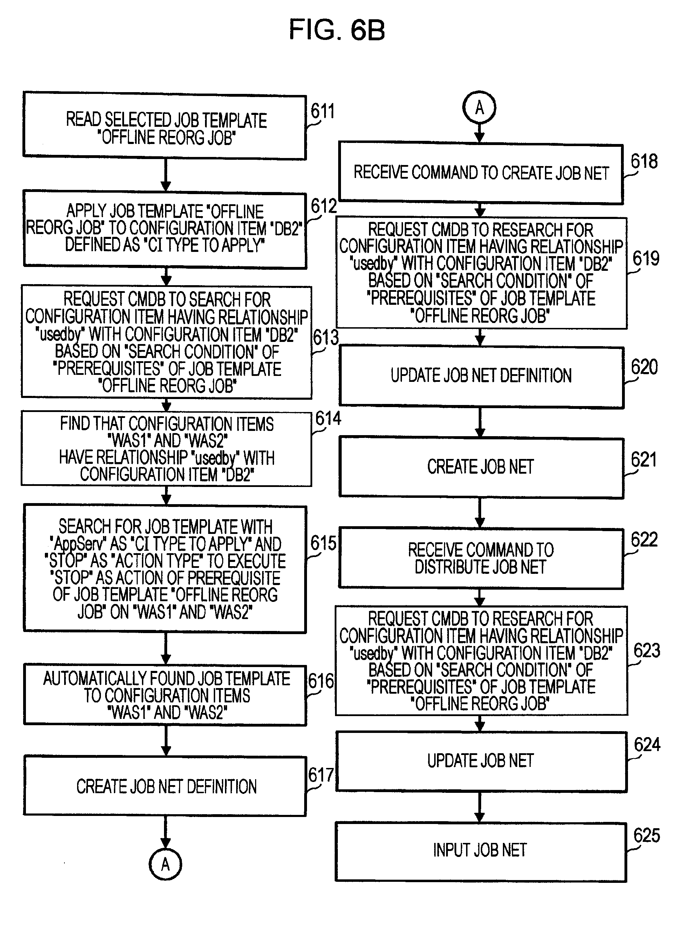

Fig. 6B is a flowchart of the process for creating a job net definition and a job net as shown in Fig. 6A.
In step S611, the job management server (501) reads at least one job template (601) designed by a job designer from the job template storage unit (502) to create a job net definition. In step S611, since the job designer selects a job template "offline reorg job", the job management server (501) reads the selected job template from the job template storage unit (502).
In step S612, the job template "offline reorg job" is applied to the configuration item "DB2" defined as a CI type to apply in the job template.
In step S613, the job management server (501) requests the CMDB (602) to search for a configuration item having a relationship of using the configuration item "DB2" ("usedBy") based on a search condition "All DB Client Stopped" in the prerequisite of the job template "offline reorg job".
In step S614, the job management server (501) detects that the configuration items "WAS1" and "WAS2" has the relationship with the configuration item DB2 based on the relationship "usedBy" of the CI instance of the configuration item "DB2" in the CMDB (602). The configuration item "DB2" has a relationship of "usedBy WAS1" with the configuration item "WAS1". The configuration item "DB2" also has a relationship of "usedBy WAS2" with the configuration item "WAS2".
In step S615, the job management server (501) searches for a job template having "AppServ" ("CI type to apply") and "Stop" ("action type") with the job template storage unit in order to execute "Stop" as the action of the prerequisite of the job template "offline reorg job" to the configuration items "WAS1" and "WAS2". As a result of the search, a job template "Stop AppServjob" is found.
In step S616, the job management server (501) automatically applies the found job template "Stop AppServjob" to the configuration items "WAS1" and "WAS2".
In step S617, the job management server (501) creates a job net definition (603) from the job template "offline reorg job" and the job template "Stop AppServjob".
In step S618, the job management server (501) receives a command to create a job net.
In step S619 as an arbitrarily executed step, the job management server (501) may repeat the processing in steps S613 to S617 in response to the command to create a job net to update the job net definition. This is because, if a predetermined period elapses from when the job net definition was created, the system configuration might be also changed and thus, the job net definition needs to be updated in some cases. The job management server (501) checks the date when the job net definition was created and requests the discovery unit to discover a configuration item if 24 hours have elapsed from the date, for example, in order to update the job net definition.
In step S620, the job management server (501) updates the job net definition if the job net definition should be updated through the discovery.
In step S621, the job management server (501) reads the job net definition to create a job net. If an argument is defined in the read job net definition, the job management server (501) applies at least one of attribute data and relationship data of the CI instance stored in the CMDB (504) to the argument. The job management server (501) also registers the actual date when a job net is input to the job net definition.
In step S622, the job management server (501) receives a command to input a job net.
Step S623 is an arbitrary step. In step S623, the job management server (501) repeats the same processing as in step S619 in response to the job net input command. This is because the system configuration might be also changed after the elapse of a predetermined period from when the job net was created. The job management server (501) checks the date when the job net was created and, if 24 hours have elapsed from when the job net was created, requests the discovery unit to discover a configuration item in order to update the job net.
In step S624, the job management server (501) updates the job net if the job net should be updated through the discovery.
In step S625, the job management server (501) inputs the job net to a computer executing the created job net.

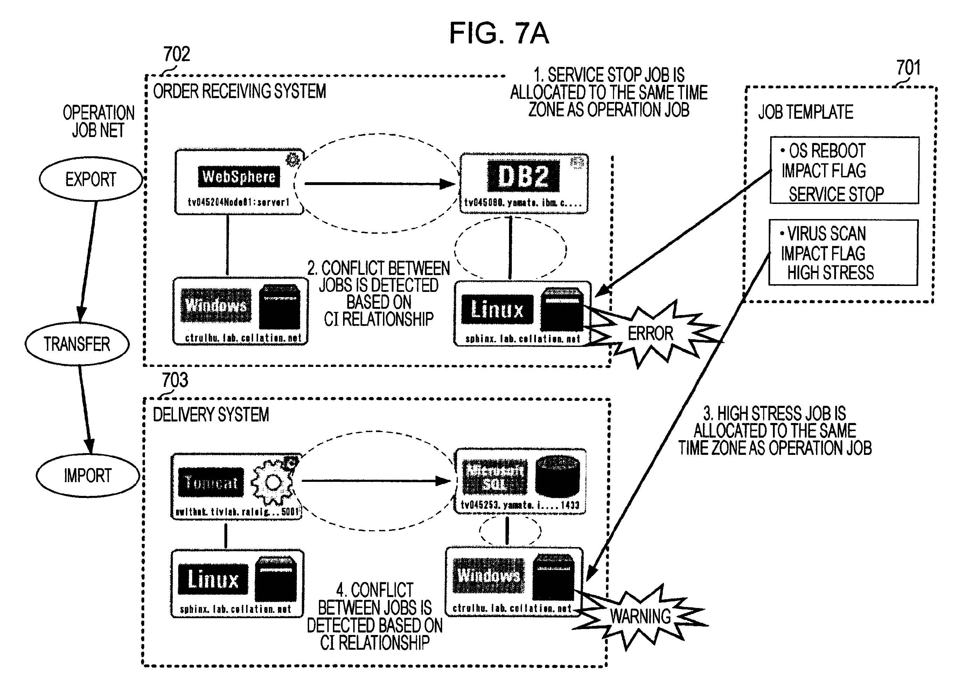

Fig. 7A shows a process for detecting a job conflict according to an embodiment of the present invention.
A job template (701) includes two job templates. The job templates are an OS reboot job template and a virus scan job template.
An impact flag of the OS reboot job template is service stop, which indicates that the execution of the OS reboot job suspends a system service.
An impact flag of the virus scan job template is high stress, which indicates that the execution of the virus scan job applies a high stress to the system.
In an order receiving system (702), it is confirmed that a service stop job is assigned to the same time zone as an operation job using configuration information in the CMDB. The same time zone means expected job execution times conflict with each other. A process for displaying an error is as follows. The job management server finds a configuration item "DB2" based on the relationship (runAt) of the CI instance of Linux using configuration information in the CMDB. Next, the job management server finds the configuration item "WAS" based on the relationship "usedBy" of the CI instance of the configuration item "DB2". Finally, the job management server finds an operation job running on the WAS based on the attribute of the configuration item "WAS". Thus, the job management server understands that if the service stop job is applied due to the OS reboot, a Linux service is stopped.
In a delivery system (703), it is found that a high stress job is assigned to the same time zone as the operation job using the configuration information in the CMDB. The same time zone means that the expected job execution times conflict with each other. The process for displaying a warning message is as follows. The job management server finds a configuration item SQL based on a relationship (runAt) of a Windows (registered trademark) CI instance using configuration information in the CMDB. Next, the job management server finds a configuration item "Tomcat" cased on a relationship "usedBy" of a CI instance of the configuration item "SQL". Finally, the job management server finds an operation job running at Tomcat using the attribute of a configuration item "Tomcat". Thus, the job management server understands that virus scan causes a high stress on Windows.

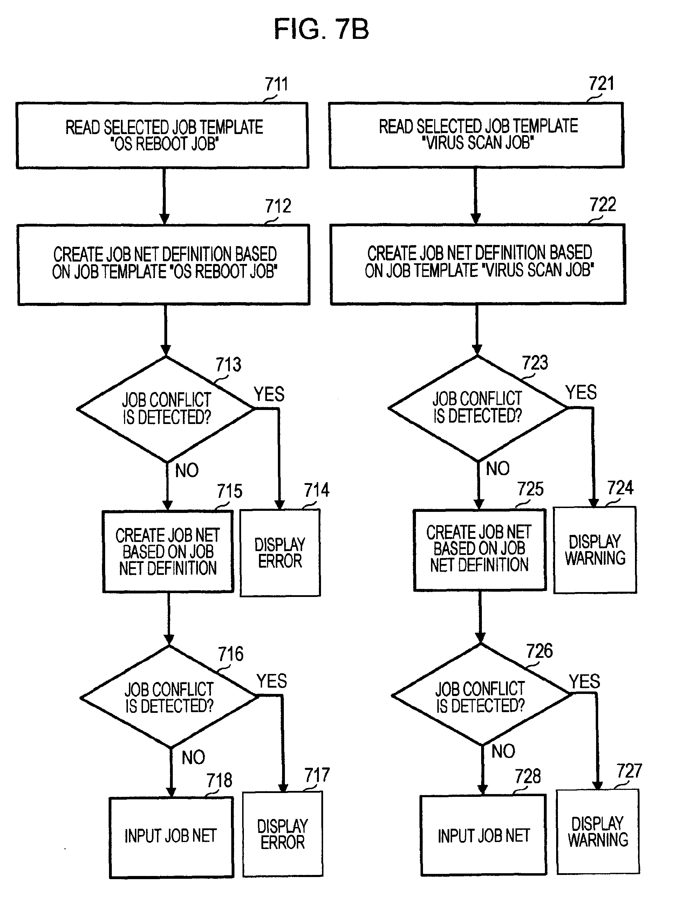

Fig. 7B is a flowchart of the process for detecting a job conflict as shown in Fig. 7A.
Flowcharts in the order receiving system (702) and the delivery system (703) are illustrated below.

### (1) Order receiving system (702)

In step S711, the job management server (501) reads a job template "OS reboot job" selected by a job designer from a template storage unit to create a job net definition.
In step S712, the server starts creation of a job net definition from the job template "OS reboot job".
In step S713, the job management server (501) determines whether a job conflict occurs. If a job conflict is found, the processing advances to step S714. On the other hand, if no job conflict is found, the job management server (501) creates a job net definition from the job template, and the processing advances to step S715.
In step S714, the job management server (501) notifies the job designer of the job conflict. The job designer views the displayed error message and determines whether to continue designing a job. Alternatively, the job management server (501) may automatically recover from an error using configuration information in the CMDB so as to eliminate the error and then create a job net definition.
In step S715, the job management server (501) starts creating a job net from the job net definition.
In step S716, the job management server (501) checks whether a job conflict occurs. If a job conflict is found, the processing advances to step S717. On the other hand, if no job conflict is found, the job management server (501) creates a job net from the job net definition and advances the processing to step S718.
In step S717, the job management server (501) notifies the job designer of the job conflict. The job designer views the displayed error message and determines whether to continue designing a job. Alternatively, the job management server (501) may automatically recover from an error using configuration information in the CMDB so as to eliminate the error and then create a job net.
In step S718, the job management server inputs the job net to a computer executing the created job net.

### (2) Delivery system (703)

In step S721, the job management server (501) reads a job template "virus scan job" selected by a job designer from a job template storage unit to create a job net definition.
In step S722, the server starts creating a job net definition from the job template "virus scan job".
In step S723, the job management server (501) determines whether a job conflict occurs. If a job conflict is found, the processing advances to step S714. On the other hand, if no job conflict is found, the job management server (501) creates a job net definition from the job template and advances the processing to step S725.
In step S724, the job management server (501) notifies the job designer of the job conflict. The job designer views the displayed error message and determines whether to continue designing a job. Alternatively, the job management server (501) may automatically recover from an error using configuration information in the CMDB so as to eliminate the error and then create a job net definition.
In step S725, the job management server (501) starts creating a job net from the job net definition.
In step S726, the job management server (501) determines whether a job conflict occurs. If a job conflict is found, the processing advances to step S717. On the other hand, if no job conflict is found, job management server (501) creates a job net from the job net definition and advances the processing to step S718.
In step S727, job management server (501) notifies the job designer of the job conflict. The job designer views the displayed error message and determines whether to continue designing a job. Alternatively, the job management server (501) may automatically recover from an error using configuration information in the CMDB so as to eliminate the error and then create a job net.
In step S728, the job management server inputs the job net to a computer executing the created job net.

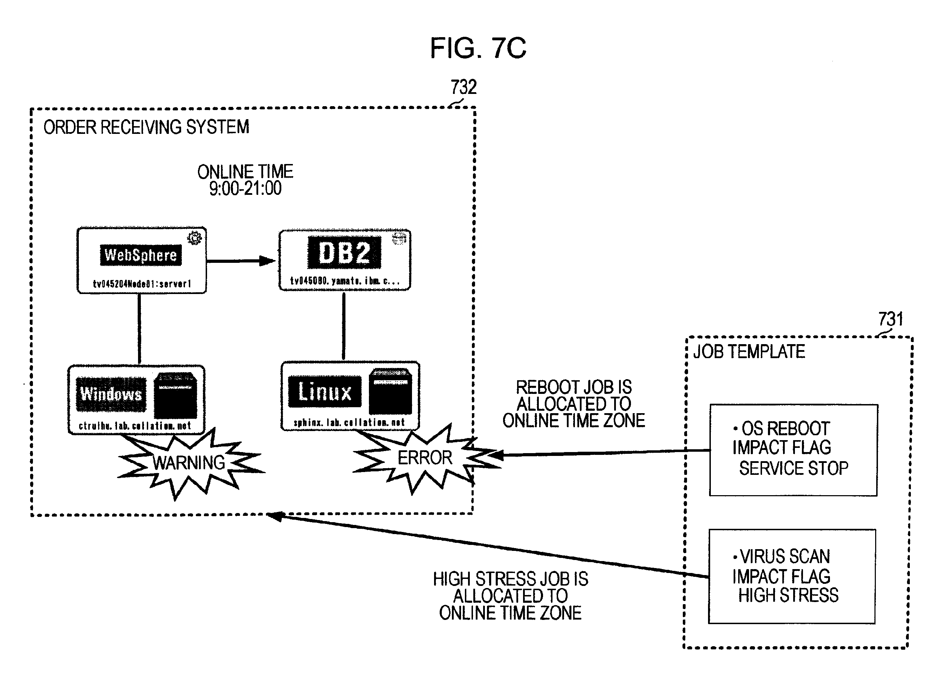

Fig. 7C shows an example of discovery of a job conflict according to an embodiment of the present invention.
A job template (731) includes two job templates. The job templates are an OS reboot job template and a virus scan job template.
An impact flag of the OS reboot job template is service stop, which indicates that the execution of the OS reboot job suspends a system service.
An impact flag of the virus scan job template is high stress, which indicates that the execution of the virus scan job applies a high stress to the system.
In the order receiving system (702), it is confirmed that a service stop job is assigned to the online time zone using configuration information in the CMDB. The same time zone means expected job execution times conflict with each other. A process for displaying an error is as follows. The job management server finds a configuration item "DB2" based on the relationship (runAt) of the CI instance of Linux using configuration information in the CMDB. Next, the job management server finds the configuration item "WAS" based on the relationship "usedBy" of the CI instance of the configuration item "DB2". Finally, the job management server finds an operation job running on the WAS based on the attribute "online time" of the configuration item "WAS". Thus, the job management server understands that if the service stop job is applied due to the OS reboot, a Linux service is stopped.
In the order receiving system (702), it is also found that a high stress job is assigned to an online time zone using configuration information in the CMDB. The same time zone means expected job execution times conflict with each other. A process for displaying a warning message is as follows. The job management server finds that execution of the virus scan job causes a high stress on a system, based on a relationship (Including) and an attribute (online time zone) of a CI of a configuration item "receiving system". The receiving system includes four configuration items "Linux", "DB2", "WebSphere" and "Windows", which are assumed as one configuration item for the receiving system.

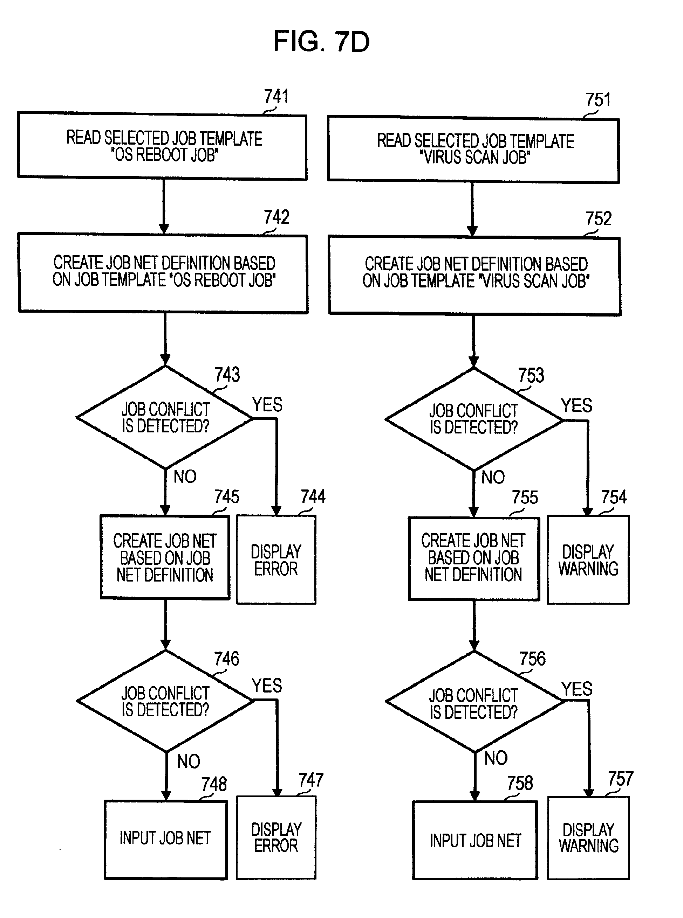

Fig. 7D is a flowchart of the process for detecting a job conflict as shown in Fig. 7C.
Flowcharts of the OS reboot job template and the virus scan job template are illustrated below.

### (1) OS reboot job template

In step S741, the job management server (501) reads a job template "OS reboot job" selected by a job designer from a job template storage unit to create a job net definition.
In step S742, the server starts creating a job net definition from the job template "OS reboot job".
In step S743, the job management server (501) determines whether a job conflict occurs. If a job conflict is found, the processing advances to step S744. On the other hand, if no job conflict is found, the job management server (501) creates a job net definition from the job template and advances the processing to step S745.
In step S744, the job management server (501) notifies the job designer of the job conflict. The job designer views the displayed error message and determines whether to continue designing a job. Alternatively, the job management server (501) may automatically recover from an error using configuration information in the CMDB so as to eliminate the error and then create a job net definition.
In step S745, the job management server (501) starts creating a job net from the job net definition.
In step S746, the job management server (501) determines whether a job conflict occurs. If a job conflict is found, the processing advances to step S74. On the other hand, if no job conflict is found, the job management server (501) creates a job net from the job net definition and advances the processing to step S748.
In step S747, the job management server (501) notifies the job designer of the job conflict. The job designer views the displayed error message and determines whether to continue designing a job. Alternatively, the job management server (501) may automatically recover from an error using configuration information in the CMDB so as to eliminate the error and then create a job net.
In step S748, the job management server inputs the job net to a computer executing the created job net.

### (2) virus scan job template

In step S751, the job management server (501) reads a job template "virus scan job" selected by a job designer from a job template storage unit to create a job net definition.
In step S752, the server starts creating a job net definition from the job template "virus scan job".
In step S753, the job management server (501) determines whether a job conflict occurs. If a job conflict is found, the processing advances to step S714. On the other hand, if no job conflict is found, the job management server (501) creates a job net definition from the job template and advances the processing to step S755.
In step S754, the job management server (501) notifies the job designer of the job conflict. The job designer views the displayed error message and determines whether to continue designing a job. Alternatively, the job management server (501) may automatically recover from an error using configuration information in the CMDB so as to eliminate the error and then create a job net definition.
In step S755, the job management server (501) starts creating a job net from the job net definition.
In step S756, the job management server (501) determines whether a job conflict occurs. If a job conflict is found, the processing advances to step S757. On the other hand, if no job conflict is found, the job management server (501) creates a job net from the job net definition and advances the processing to step S758.
In step S757, the job management server (501) notifies the job designer of the job conflict. The job designer views the displayed error message and determines whether to continue designing a job. Alternatively, the job management server (501) may automatically recover from an error using configuration information in the CMDB so as to eliminate the error and then create a job net.
In step S758, the job management server (501) inputs the job net to a computer executing the created job net.

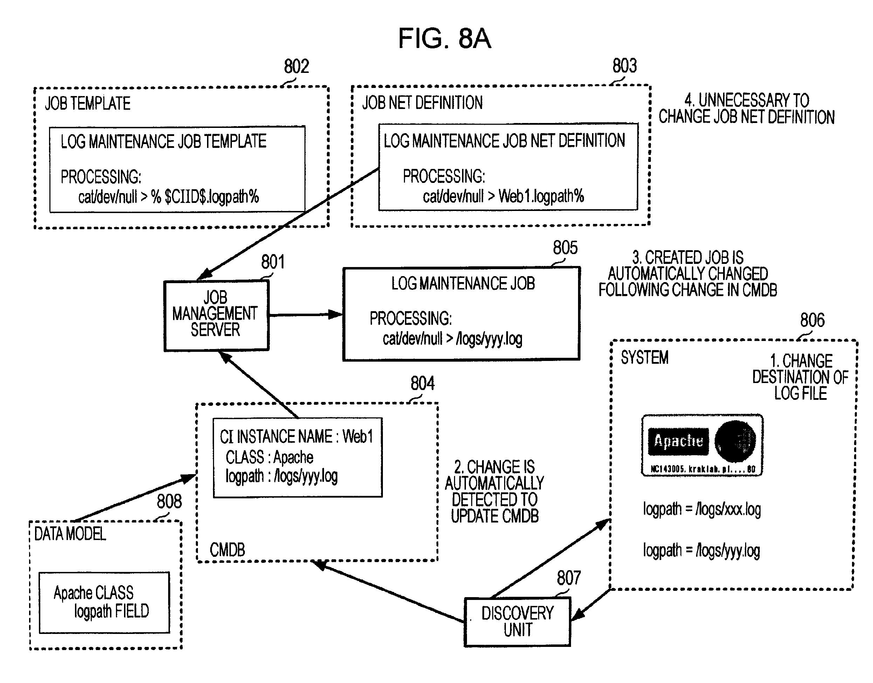

Fig. 8A shows a process for updating a job net according to an embodiment of the present invention.
A job management server (801) promotes reuse of job design through updating of a job net.
A job template (802) is a log maintenance job template. In the template, a directory represented by %$CIID$.logpath% is used for the execution command processing. A job net definition (803) is a log maintenance job net definition.
In the definition, a directory represented by %Web1.logpath% is used for the execution command processing. The directory of the job net definition (803) is obtained by converting a directory defined in the job template (802) into an instance.
Upon creating a job net definition (803) from the job template (802), the job management server (801) substitutes %Web1 to %$CIID$ to create an instance.
The job management server (801) reads a value of the attribute "logpath" of a configuration item "Web1" (CI instance name: Web1). It is assumed that the value of the attribute "logpath" is logpath=/logs/xxx.log. The job management server (801) substitutes the attribute value "/logs/xxx.log" from the CMDB to "%Web1" of the job net definition to create the job net (805).
Next, it is assumed that the attribute value "logpath" of the configuration item "Web1" is changed from "/logs/xxx.log" to "/logs/yyy.log". The discovery unit automatically detects the change through discovery. As a result of the detection, data about a CI instance in the CMDB is updated. Then, the job management server (801) reads the attribute value "/logs/yyy.log" of the CI instance in the CMDB corresponding to the Webl, and substitutes the attribute value to "%Web1" of the job net definition to create a job net.
In this way, the argument is used in the job template (802) and the job net definition (803), and thus, the destination of a log file can be changed based on information from the CMDB without changing the job net definition.

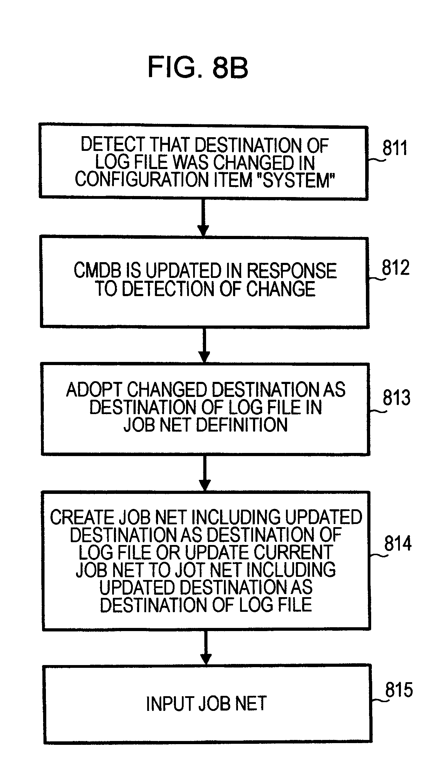

Fig. 8B is a flowchart of the process for updating the job net as shown in Fig. 8A.
In step S811, the discovery unit detects information about a configuration item "system" (806). The CMDB system (Fig. 1A, 100) detects that a destination of a log file is changed in the configuration item "system" based on the information.
In step S812, the CMDB system updates the CMDB along with the detection of the change. More specifically, an attribute value "logpath" of a CI instance of the configuration item "system" is changed from "/logs/xxx.log" to "/logs/yyy.log".
In step S813, the job management server (801) substitutes the changed value "/logs/yyy.log" to the argument of the log maintenance job net definition.
In step S814, the job management server (801) creates a job net including the changed destination as a destination of the log file and updates the current job net to the created job net.
In step S815, the job management server (501) inputs the job net to a computer executing the created job net.

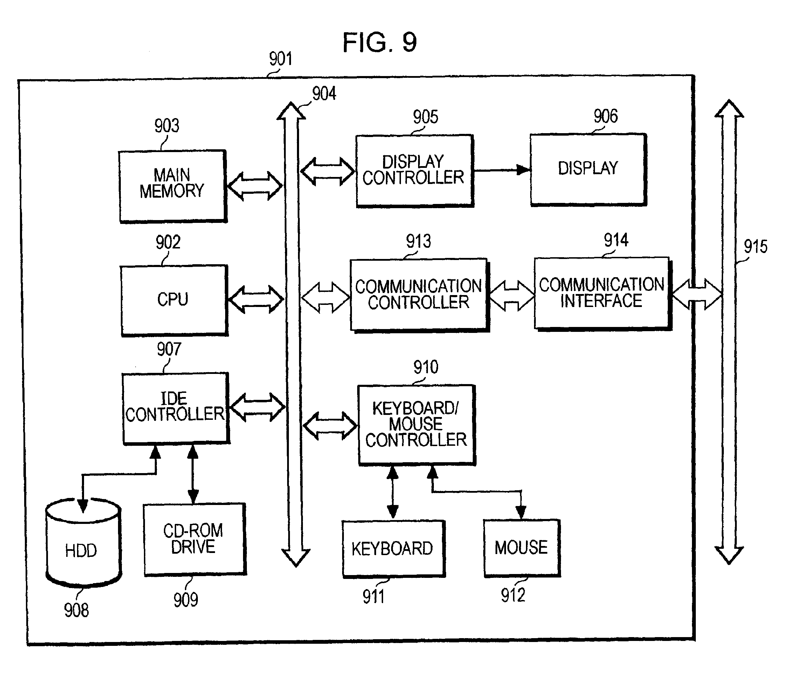

Fig. 9 is a block diagram of computer hardware according to an embodiment of the present invention.
A computer system (901) according to the embodiment of the present invention includes a CPU (902) and a main memory (903), which are connected to a bus (904). The CPU (902) is preferably based on 32-bit or 64-bit architecture. Conceivable examples thereof include Intel Xeon (registered trademark) series, Core (registered trademark) series, Atom (registered trademark) series, Pentium (registered trademark) series, Celeron (registered trademark) series, AMD Phenom (registered trademark) series, Athlon (registered trademark) series, Turion (registered trademark) series, and Sempron (registered trademark). The bus (904) is connected to a display (906) such as an LCD monitor through a display controller (905). The display (906) is used to display information about a computer system connected to a network through a communication line and information about software running on the computer system to manage the computer system on an appropriate graphic interface. The bus (904) is also connected to a hard disk or silicon disk (908) and a CD-ROM, DVD or Blu-ray drive (909) through an IDE or SATA controller (907). The CD-ROM, DVD or BD drive (909) is optionally used to load a program from a CD-ROM, a DVD-ROM, or a BD to a hard disk or silicon disk (908). The bus (904) is further connected to a keyboard (911) and a mouse (912) through a keyboard/mouse controller (910) or a USB controller (not shown).

The hard disk (908) stores a program product providing an operating system, J2EE, or other such Java processing environments, an operation managmnet program product for a CMDB, and other programs and data in the form of being loadable to the main memory (903). Preferably, the operation management program product includes the IBM TADDM (Tivoli (registered trademark)Application Dependency Discovery Manager).

A communication interface (914) conforms to, for example, an Ethernet (registered trademark) protocol. The communication interface (914) is connected to the bus (904) through the communication controller (913), and used to physically connect the computer system (901) with a communication line (915) and provide a network interface layer based on a TCP/IP communication protocol for a communication function of the operating system of the computer system (901). Further, the communication line may be a wired LAN or a wireless LAN compliant to wireless LAN connection standards, for example, IEEE802.11a/b/g/n.

Here, conceivable examples of a network attached device for connecting hardware of a computer include a router and a hardware management console in addition to the network switch if not all. In short, the device has a function of sending, in response to a predetermined command from a computer where the network operation management program is installed, configuration information such as an IP address or MAC address of the computer connected thereto back to the computer. The network switch and router includes an ARP table for an address resolution protocol (ARP) including a list of pairs of an IP address of the connected computer and a corresponding MAC address, and has a function of sending information in the ARP table in response to a predetermined command. The hardware management console can send back configuration information more detailed than that in the ARP table.

The computer is connected to the above hardware management console. This is to enable a function of physically dividing one computer into plural blocks based on LPAR (virtual logical partition) to run different Oss such as Windows (registered trademark) and Linux (registered trademark) in each block using VMware. If an inquiry is sent to the hardware management console in terms of system, detailed information in each logic block of the computer operating in LPAR/VMware can be obtained.

The present invention is described above based on the embodiments but the embodiments merely describe an example of the present invention, and those skilled in the art could conceive various modifications without departing from the technical scope of the present invention. For example, a database and a CI may be provided in another form, not a CMDB and a CI stored therein. Further, it is possible to adopt any computer development environments capable of calling an API having a network management function such as C++ or C# in addition to Java.

### Brief Description of the Drawings

[Fig. 1A] Fig. 1A shows an example of a computer system including a CMDB for managing a CI according to the related art.
[Fig. 1B] Fig. 1B schematically shows a configuration management tool according to the related art.
[Fig. 2A] Fig. 2A shows how to create a CI, a CI instance, and a relationship (usedBy) instance according to the related art.
[Fig. 2B] Fig. 2B shows a data model, a discovery instance, a CI instance, and a relationship model according to the related art.

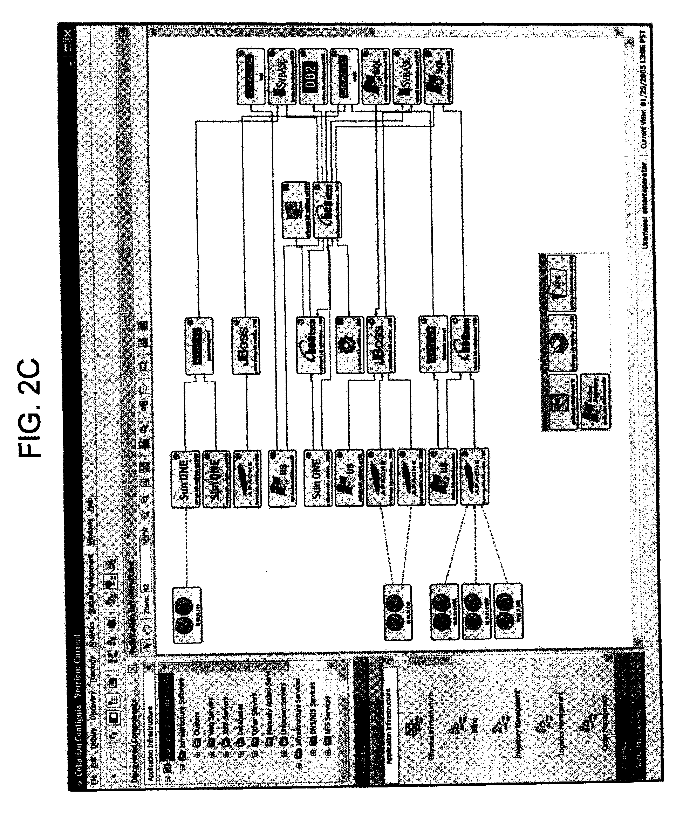

[Fig. 2C] Fig. 2C shows a screen example of configuration information management in a CMDB according to the related art.

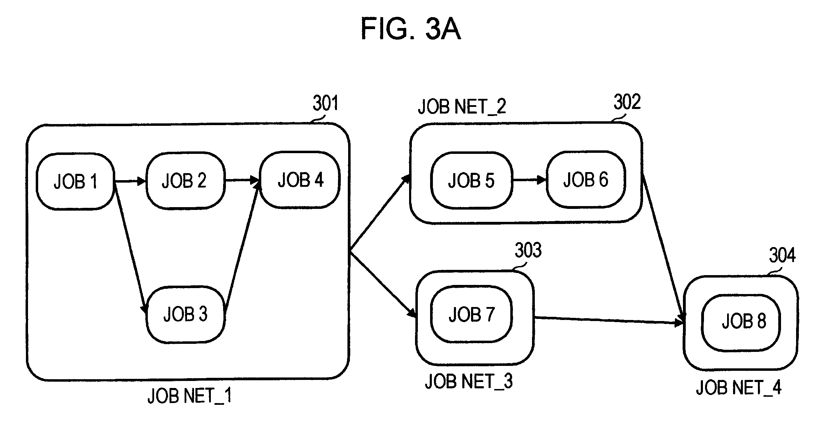

[Fig. 3A] Fig. 3A shows an example of a job net according to an embodiment of the present invention.
[Fig. 3B] Fig. 3B shows an example of a job template according to an embodiment of the present invention.
[Fig. 3C] Fig. 3C shows an example of a job definition according to an embodiment of the present invention.
[Fig. 3D] Fig. 3D shows an example of a job net definition according to an embodiment of the present invention.
[Fig. 4] Fig. 4 shows an example of a job management server according to the related art.
[Fig. 5A] Fig. 5A is a diagram showing an example of the entire system configuration according to an embodiment of the present invention.
[Fig. 5B] Fig. 5B is a diagram showing an example of a job management server according to an embodiment of the present invention.
[Fig. 5C] Fig. 5C is a flowchart of a process for creating a job net definition and a job net according to an embodiment of the present invention.
[Fig. 5D] Fig. 5D is a flowchart of a process for updating a job net definition or a job net according to an embodiment of the present invention.
[Fig. 5E] Fig. 5E is a flowchart of a process for verifying a job according to an embodiment of the present invention.
[Fig. 5F] Fig. 5F is a flowchart of a process for detecting a job conflict according to an embodiment of the present invention.
[Fig. 6A] Fig. 6A shows a process for creating a job net definition and a job net according to an embodiment of the present invention.
[Fig. 6B] Fig. 6B is a flowchart of the process for creating a job net definition and a job net as shown in Fig. 6A.
[Fig. 7A] Fig. 7A shows a process for detecting a job conflict according to an embodiment of the present invention.
[Fig. 7B] Fig. 7B is a flowchart of the process for detecting a job conflict as shown in Fig. 7A.
[Fig. 7C] Fig. 7C shows an example of a process for detecting a job conflict according to an embodiment of the present invention.
[Fig. 7D] Fig. 7D is a flowchart of the process for detecting a job conflict as shown in Fig. 7C.
[Fig. 8A] Fig. 8A shows a process for updating a job net according to an embodiment of the present invention.
[Fig. 8B] Fig. 8B is a flowchart of the process for updating a job net as shown in Fig. 8A.
[Fig. 9] Fig. 9 shows an example of a computer system according to an embodiment of the present invention.

## Claims

1. A computer system for managing a batch job, comprising:
a storage unit for storing at least one job template; and
an execution unit for creating or updating a job net definition following a condition defined in the at least one job template, creating or updating a job net, or executing a discovery of a job conflict using at least one attribute or relationship in a set of data including at least one predetermined attribute of an configuration item, and a relationship between the configuration item and another configuration item, the set of data being stored in a repository and updatable through a discovery for detecting information about a configuration item.

2. The computer system according to Claim 1, wherein the execution unit includes a first creating unit that creates a job net definition from the at least one job template or updates a job net definition using at least one attribute or relationship in the set of data.

3. The computer system according to Claim 2, wherein the job template includes a job execution type, a job execution command, a configuration item to which the job template is applied, and a job execution prerequisite.

4. The computer system according to Claim 2, wherein the job net definition includes a job description, an execution sequence of jobs, and a job execution schedule.

5. The computer system according to Claim 3, wherein the prerequisite includes a condition for searching for a configuration item, and a job execution type for the configuration item.

6. The computer system according to Claim 5, wherein the first creating unit identifies a configuration item that matches a condition in the prerequisite using at least one attribute or relationship in the set of data.

7. The computer system according to Claim 6, wherein the first creating unit associates the identified configuration item with another job template.

8. The computer system according to Claim 2, wherein the first creating unit applies a user-defined job definition to the job template to create a job net definition.

9. The computer system according to Claim 8, wherein the job definition includes a job definition name, a job description, a job executor, a job-executing user, a job start schedule, a preceding job, an estimated job execution time, and a job template name.

10. The computer system according to Claim 2, wherein the job template includes an argument for obtaining a set of data regarding a configuration item.

11. The computer system according to Claim 1, wherein the execution unit includes a second creating unit that creates a job net from a job net definition or updates a job net using at least one attribute or relationship in the set of data.

12. The computer system according to Claim 11,
wherein the job net definition includes an argument for obtaining a set of data regarding a configuration item.

13. The computer system according to Claim 12,
wherein the job net definition is a log maintenance job net definition, the argument is logpath, and data of the logpath is updated using the set of data.

14. The computer system according to Claim 11,
wherein the second creating unit applies a date when a job net is input to a system for executing the job net, and at least one of an attribute and a relationship of a set of data corresponding to an argument for a configuration item defined by a job net definition, to the job net.

15. The computer system according to Claim 1, wherein the job conflict includes a case where an execution time zone where at least one of a first configuration item associated with a job execution command of a first job template and a second configuration item having a relationship with the first configuration item is used by the job conflicts with an execution time zone where at least one of a third configuration item associated with a job execution command of a second job template and a fourth configuration item having a relationship with the third configuration item is used by the job.

16. The computer system according to Claim 15,
wherein the second configuration item is detected using at least one attribute or relationship in a set of data regarding the first configuration item, and the fourth configuration item is detected using at least one attribute or relationship in a set of data regarding the third configuration item.

17. The computer system according to Claim 16,
wherein the set of data regarding the first configuration item is a set of data updated through the discovery, or the set of data regarding the third configuration item is a set of data updated through the discovery.

18. The computer system according to Claim 1, wherein the job conflict includes a case where at least one of an execution time zone where a first configuration item associated with a job execution command of the job template and a second configuration item having a relationship with the first configuration item is used by the job is a time zone that prohibits execution of the job.

19. The computer system according to Claim 18,
wherein each of the set of data regarding the first configuration item and the set of data regarding the second configuration item is a set of data updated through the discovery.

20. The computer system according to Claim 1, wherein the discovery is executed just before the job net definition is created, just before the job net is created, or just before the job net is input to a system for executing the job net.

21. The computer system according to Claim 1, wherein the job net includes a job for the discovery.

22. A method for managing a batch job, comprising:
identifying a configuration item defined in at least one job template; and
creating or updating a job net definition following a condition defined in the at least one job template, creating or updating a job net, or executing a discovery of a job conflict using at least one attribute or relationship in a set of data including at least one predetermined attribute of an configuration item, and a relationship between the configuration item and another configuration item, the set of data being stored in a repository and updatable through a discovery for detecting information about a configuration item.

23. The method according to Claim 22, further comprising:
creating a job net definition from a job template using at least one attribute or relationship in the set of data; and
creating a job net from a job net definition using at least one attribute or relationship in the set of data.

24. A method for managing a batch job, comprising:
storing a set of data including at least one predetermined attribute of an configuration item, and a relationship between the configuration item and another configuration item in a repository, the set of data being updatable through a discovery for detecting information about a configuration item;
identifying a configuration item defined in a job template;
searching for another configuration item matching a condition defined in the job template using at least one attribute or relationship in the set of data regarding the identified configuration item;
associating the other configuration item found through the search with another job template; and
creating a job net definition using the job template and the other job template.

25. A computer program product for managing a batch job, which prompts a computer system to execute each step in the method according to any one of Claims 22 to 24.
